# EUROPÄISCHE PATENTSCHRIFT

(11) **EP 3 103 069 B1**
(45) Veröffentlichungstag und Bekanntmachung des Hinweises auf die Patenterteilung: **29.07.2020**
(21) Anmeldenummer: 15707295.0
(22) Anmeldetag: 05.02.2015
(51) Int. Cl.: G06N 3/063

(54) **VORRICHTUNG ZUR AUSWERTUNG EINES ZEITINTERVALLS ZWISCHEN ZWEI ANREGUNGEN**
DEVICE FOR THE EVALUATION OF A TIME-INTERVAL BETWEEN TWO EXCITATIONS
APPAREIL À L'ÉVALUATION D'UN INTERVALLE DE TEMPS ENTRE DEUX EXCITATIONS

(30) Priorität: 05.02.2014 DE 102014202107
(43) Veröffentlichungstag der Anmeldung: 14.12.2016
(73) Patentinhaber: Salinga, Martin, 48149 Münster (DE)
(72) Erfinder: Salinga, Martin, 48149 Münster (DE)
(74) Vertreter: FARAGO Patentanwälte
(86) Internationale Anmeldenummer: PCT/EP2015/052420
(87) Internationale Veröffentlichungsnummer: WO 2015/118071

(56) Entgegenhaltungen:
- EP-A1- 2 541 770
- WO-A1-2011/074021
- US-A- 5 296 835
- US-A1- 2004 006 545
- DUYGU KUZUM ET AL: "Nanoelectronic Programmable Synapses Based on Phase Change Materials for Brain-Inspired Computing", NANO LETTERS, Bd. 12, Nr. 5, 9. Mai 2012 (2012-05-09), Seiten 2179-2186, XP055138928, ISSN: 1530-6984, DOI: 10.1021/nl201040y & Duygu Kuzum ET AL: "SUPPORTING INFORMATION I. PCM DEVICES", Nano Letters 2012, 12 (5), 14. November 2011 (2011-11-14), Seiten 1-7, XP055201655, Gefunden im Internet: URL:http://pubs.acs.org/doi/suppl/10.1021/ nl201040y/suppl_file/nl201040y_si_001.pdf [gefunden am 2015-07-10]
- SUNG HYUN JO ET AL: "Nanoscale Memristor Device as Synapse in Neuromorphic Systems", NANO LETTERS, Bd. 10, Nr. 4, 14. April 2010 (2010-04-14) , Seiten 1297-1301, XP055200946, ISSN: 1530-6984, DOI: 10.1021/nl904092h in der Anmeldung erwähnt
- YI LI ET AL: "Activity-Dependent Synaptic Plasticity of a Chalcogenide Electronic Synapse for Neuromorphic Systems", SCIENTIFIC REPORTS, Bd. 4, 9. Mai 2014 (2014-05-09), XP055200953, DOI: 10.1038/srep04906
- DAE-HWAN KANG ET AL: "Emulation of spike-timing dependent plasticity in phase- change memory cells for neuromorphic applications", E\PCOS EUROPEAN PHASE CHANGE AND OVONIC SYMPOSIUM 2013 SYMPOSIUM, [Online] 1 September 2013 (2013-09-01), pages 1-7, XP055529473, Berlin, Germany Retrieved from the Internet: URL:https://docs.wixstatic.com/ugd/3d44dd_ 549f2efece664fefb8d6bc9a4bf2e7e0.pdf> [retrieved on 2018-12-03]

## Beschreibung

Die vorliegende Erfindung betrifft ein Verfahren zur Auswertung eines Zeitintervalls zwischen zwei Anregungen, die mindestens ein anregbares Material umfasst, welches durch eine Anregung in einen angeregten Zustand gebracht werden kann, wobei sich die Anregbarkeit des Materials in diesem angeregten Zustand mit der Zeit verändert. Darüber hinaus betrifft die vorliegende Erfindung auch die Verwendung einer Vorrichtung für das Verfahren zur Auswertung eines Zeitintervalls zwischen zwei Anregungen, sowie ein künstliches neuronales Netzwerk, welches mindestens eine erfindungsgemäße Vorrichtung umfasst.

Die Fähigkeit des menschlichen Gehirns zu lernen, liegt insbesondere an den Verbindungen zwischen Neuronen, die Synapsen genannt werden. Bei jeder Aktivität des Gehirns werden Informationen in Form von elektrischen Impulsen von Neuron zu Neuron weitergegeben. Dabei redet man auch davon, dass die Neuronen "feuern". Diese Weitergabe von Signalen kann beim Lernen geübt und verbessert werden.

Eine Synapse stellt dabei eine Verknüpfungsstelle dar, über die ein Neuron zum Beispiel in Kontakt mit einem anderen Neuron, einer Sinneszelle, einer Muskelzelle oder einer Drüsenzelle steht. Synapsen dienen der Übertragung von Impulsen beziehungsweise Signalen, erlauben aber auch die Modulation der Impuls- bzw. Signalübertragung und können darüber hinaus durch anpassende Veränderungen Informationen speichern beziehungsweise zum Lernen beitragen.

Eine Synapse kann also zum Beispiel eine Verknüpfungsstelle zwischen einem Axon eines Neurons und den Dendriten eines anderen Neurons darstellen. Diese beiden über eine Synapse verbundenen Neuronen werden dann jeweils als präsynaptisches und postsynaptisch bezeichnet.

Wenn ein erstes Neuron (präsynaptisches Neuron) einen Impuls (prä-Impuls) aussendet, der in einem zweiten Neuron (postsynaptisches Neuron) das Aussenden eines weiteren Impulses (post-Impuls) bewirkt, kann es Sinn machen, den Kontakt dieser beiden Neuronen zu verbessern.

Dies trifft insbesondere zu, wenn ein Zusammenhang zwischen dem Impuls des ersten Neurons und dem Antwortimpuls des zweiten Neurons besteht. Ein solcher Zusammenhang besteht zum Beispiel, wenn beide Impulse innerhalb eines kurzen Zeitintervalls an einer Synapse ankommen. Dies spricht dafür, dass zwischen den Impulsen eine Korrelation besteht. In diesem Fall macht es dann Sinn, den Kontakt dieser Neuronen über diese Synapse zu verbessern.

Besteht kein derartiger Zusammenhang, kann der Kontakt bevorzugter Weise geschwächt beziehungsweise verschlechtert werden.

Dieses Verhalten wird "spike-timing dependent plasticity" (STDP) genannt und führt dazu, dass bestimmte Verknüpfungen von Neuronen verbessert werden, wenn sie oft relevant sind beziehungsweise oft benötigt werden, während andere, die seltener relevant sind oder seltener benötigt werden, möglicherweise verfallen.

Dieses Verhalten trägt demnach auch maßgeblich dazu bei, dass das Gehirn lernt.

Die natürlichen Neuronennetzwerke des Gehirns dienen in jüngster Zeit auch als Inspiration für sogenannte neuromorphe Hardware. Dabei handelt es sich um Hardware, die gemäß dem Beispiel von natürlichen Neuronennetzwerken aufgebaut ist.

Es ist dabei bekannt, in neuromorpher Hardware ein STDP-Verhalten durch das Vorsehen künstlicher Synapsen zu realisieren. Eine solche künstliche Synapse kann dabei zum Beispiel auch durch ein Phasenwechselmaterial realisiert werden.

Ein Phasenwechselmaterial kann durch einen Impuls, dessen Spannung einen bestimmten Schwellenwert überschreitet, von einer Phase in eine andere Phase übergehen (zum Beispiel von einer amorphen in eine kristalline Phase oder von einer kristallinen in eine amorphe Phase) und dabei seinen Widerstand verändern.

Demnach können Phasenwechselmaterialien im Stand der Technik in künstlichen Synapsen zunächst dazu verwendet werden, eine Veränderung des Gewichts von künstlichen Synapsen zu erreichen und somit die Verbindung zwischen zwei künstlichen Neuronen durch eine Reduzierung des Widerstands des Phasenwechselmaterials zu verbessern oder durch eine Erhöhung des Widerstands des Phasenwechselmaterials zu verschlechtern. Mit dem Gewicht einer künstlichen Synapse kann dabei insbesondere zum Beispiel die Stärke beziehungsweise Qualität einer durch eine Synapse hergestellten Verbindung gemeint sein.

Darüber hinaus kann im Stand der Technik gegebenenfalls auch ein STDP-Verhalten realisiert werden. Dazu müssen zwei Impulse von Neuronen, die an einer Synapse eintreffen, gemäß dem Stand der Technik jedoch so -insbesondere zeitlich- abgestimmt werden, dass sie nur bei einer geeigneten Überlagerung beider Impulse gemeinsam einen Wechsel des Widerstands des verwendeten Phasenwechselmaterials bewirken können. Dabei wird einer der Impulse (in der Regel zum Beispiel der Impuls des präsynaptischen Neurons) relativ kurz gewählt. Dieser kurze Impuls kann dann je nach Timing beziehungsweise je nach zeitlicher Abstimmung der beiden Impulse einen Teil eines weiteren/zweiten/längeren Impulses (in der Regel zum Beispiel der Impuls des postynaptischen Neurons), der an der gleichen Synapse ankommt, durch Überlagerung auswählen.

Nur bei Überlagerung der beiden Impulse übersteigt die angelegte Spannung den Schwellenwert, der benötigt wird, um einen Phasenwechsel auszulösen und den Widerstand des Phasenwechselmaterials zu beeinflussen. Der andere/zweite/längere Impuls wird dabei derart ausgestaltet, dass der Widerstand des verwendeten Phasenwechselmaterials der künstlichen Synapse entweder reduziert oder erhöht werden kann, je nachdem, in welchem Teil dieses längeren Impulses eine Überlagerung mit dem kurzen Impuls erfolgt. Somit kann die Verbindung durch die künstliche Synapse in Abhängigkeit des Timings der beiden Impulse gegebenenfalls verbessert oder verschlechtert werden.

Um, wie hiervor beschrieben und im Stand der Technik bekannt, ein STDP- Verhalten mit künstlichen Synapsen zu realisieren, ist daher ein genaues Timing beziehungsweise eine genaue zeitliche Abstimmung der gesendeten Impulse durch eine zusätzliche externe Elektronik erforderlich.

Ferner sollte der Widerstand einer künstlichen Synapse möglichst dann maximal reduziert werden, um die dadurch ermöglichte Verbindung von künstlichen Neuronen zu verbessen, wenn der zweite Impuls an der künstlichen Synapse unmittelbar nach dem ersten Impuls eintrifft, da in diesem Fall eine tatsächliche Korrelation zwischen den beiden Impulsen am wahrscheinlichsten ist.

Dies ist im Stand der Technik jedoch nicht ohne weiteres möglich, da eine maximale Veränderung/Verringerung des Widerstands gemäß dem Stand der Technik gegebenenfalls erst möglich sein kann, wenn der kürzere Impuls mit dem Mittelteil des längeren Impulses in Überlagerung gebracht wird. Dazu muss der kürzere Impuls gegebenenfalls entsprechend extern verzögert werden.

Durch eine zeitliche Verzögerung der ausgesendeten Impulse, die gegebenenfalls erforderlich ist, um ein geeignetes Timing zu erreichen, können künstliche Neuronen gegebenenfalls nicht genau dann einen Impuls aussenden, wenn es für die Funktionalität eines künstlichen neuronalen Netzwerks sinnvoll wäre. Ferner wird durch entsprechende systembedingte beziehungsweise verfahrensbedingte Verzögerungen auch die Dauer verlängert, die für eine Veränderung der künstlichen Synapse notwendig ist. Dies kann insbesondre zum Beispiel problematisch werden, wenn eine möglichst hohe Verarbeitungsgeschwindigkeit beziehungsweise ein hoher Datendurchsatz wünschenswert ist.

Das maximale Zeitintervall zwischen zwei Impulsen, die noch eine Veränderung des Widerstands eines Phasenwechselmaterials in einer künstlichen Synapse und somit eine Verbesserung oder eine Verschlechterung der dadurch erreichten Verbindung bewirken können, wird demnach im Stand der Technik durch die Länge des längeren der beiden Impulse bestimmt. Eine Veränderung des Widerstands kann nur bei einer Überlagerung der beiden Impulse und somit während der Dauer des längeren Impulses erfolgen. In der Tat kann nach dem längeren Impuls offensichtlich keine Überlagerung der beiden Impulse mehr erfolgen.

Sofern das maximale Zeitintervall zwischen zwei Impulsen, die noch eine Veränderung des Widerstands eines Phasenwechselmaterials in einer künstlichen Synapse bewirken können, wie in der Natur im Millisekundenbereich liegen soll, um zum Beispiel das Verhalten eines natürlichen Neuronennetzwerks beziehungsweise eines Gehirn gegebenenfalls möglichst genau zu emulieren und/oder Informationen beziehungsweise Daten zu verarbeiten, die auf für Menschen relevanten Zeitskalen gewonnen werden, muss der längere der zwei an der Synapse ankommenden Impulse gemäß dem Stand der Technik relativ lang sein und ebenfalls im Millisekundenbereich liegen.

Zudem sind auch lange Impulse im Millisekundenbereich problematisch, da der Energieverbrauch dadurch relativ hoch wird.

Ferner ist problematisch, dass externe Elektronik, die im Stand der Technik für das Timing der Impulse erforderlich ist, Platz erfordert. Dies kann insbesondere problematisch sein, wenn ein Netzwerk zum Beispiel mit mehreren tausenden, zehntausenden, hunderttausenden, Millionen beziehungsweise hundert Millionen oder sogar mehreren Milliarden künstlicher Synapsen und künstlicher Neuronen in Erwägung gezogen wird.

Das Dokument DUYGU KUZUM et al. (Nanoelectronic Programmable Synapses based on Phase Change Materials for Brain-inspired Computing. Nano Letters, Bd. 12, Nr. 5, 9. Mai 2012, Seiten 2179 -2186) offenbart Verfahren zur Auswertung eines Zeitintervalls zwischen zwei Anregungen, dadurch gekennzeichnet, dass 1. eine erste Anregung an ein anregbares Halbleitermaterial angelegt wird, um dieses Material in einen angeregten amorphen Zustand zu versetzen, 2. ein temporärer Wechsel von einem elektrisch schlechter leitenden zu einem elektrisch besser leitenden Zustand im angeregten amorphen Zustand durch die zweite Anregung ausgelöst wird.

Das erfindungsgemäße Verfahren unterscheidet sich von KANG darin, dass 1.) die Anregbarkeit des anregbaren Halbleitermaterials im angeregten amorphen Zustand mit der Zeit abnimmt, ergebend einen mit der Zeit ansteigenden Spannungsschwellenwert, der den Übergang zwischen schlechter Leitfähigkeit bei niedrigen Spannungen und guter Leitfähigkeit bei hohen Spannungen markiert, 2.) eine zweite Anregung an das anregbare Halbleitermaterial im angeregten amorphen Zustand angelegt wird, wobei die zweite Anregung so gewählt wird, dass ein temporärer Wechsel des anregbaren Halbleitermaterials von einem elektrisch schlechter leitenden zu einem elektrisch besser leitenden Zustand nur erfolgt, wenn ein Wert für das Zeitintervall zwischen der ersten und zweiten Anregung nicht überschritten wird, und 3.) ein temporärer Wechsel von einem elektrisch schlechter leitenden zu einem elektrisch besser leitenden Zustand in Abhängigkeit der Veränderung der Anregbarkeit des anregbaren Halbleitermaterials im angeregten amorphen Zustand durch die zweite Anregung ausgelöst wird, wobei die Auswertung des Zeitintervalls zwischen zwei Anregungen dadurch erfolgt, dass die Wahrscheinlichkeit, eine Veränderung mit einer zweiten Anregung auslösen zu können, entsprechend der mit der Zeit abnehmenden elektrischen Anregbarkeit, mit der Zeit abnimmt.

Das Dokument KANG, D.-H. (Emulation of spike-timing dependent plasticity in phase-change memory cells for neuromorphic applications. E/PCOS European Phase Change and Ovonic Symposium 2013, 1. September 2013, Seiten 1 bis 7) offenbart ebenfalls ein Verfahren zur Auswertung eines Zeitintervalls zwischen zwei Anregungen mit den Merkmalen des oben beschriebenen Dokuments KUZUM et. Al. und weist entsprechend dieselben Unterscheidungsmerkmale zur vorliegenden Erfindung auf.

Es besteht demnach ein Bedarf daran, eine Lösung für die oben genannten Probleme zu finden.

Die vorliegende Erfindung betrifft ein Verfahren zur Auswertung eines Zeitintervalls zwischen zwei Anregungen gemäß Anspruch 1, die mindestens ein anregbares Material umfassen, welches durch eine Anregung zumindest teilweise in einen angeregten Zustand gebracht werden kann, wobei sich die Anregbarkeit des Materials in diesem angeregten Zustand mit der Zeit verändert. Die Erfindung betrifft zudem die Verwendung einer Vorrichtung für das erfindungsgemäße Verfahren und ein künstliches neuronales Netzwerk unter Verwendung dieser Vorrichtung.

Weitere beispielhafte Ausführungsformen der vorliegenden Erfindung sind in den Unteransprüchen und in der Beschreibung zu finden.

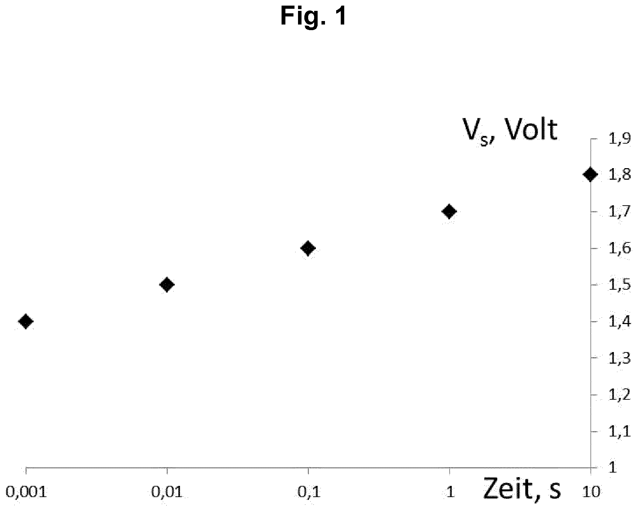

Die Erfindung basiert einerseits auf der Tatsache, dass elektrisch anregbare amorphe Halbleitermaterialien in ihrer Leitfähigkeit stark nicht-linear auf elektrische Anregungen durch Spannungssignale reagieren. Oft, wie zum Beispiel auch in amorphen Phasenwechselmaterialien, gibt es sogar einen scharfen Übergang zwischen schlechter Leitfähigkeit bei niedrigen Spannungen und guter Leitfähigkeit bei hohen Spannungen. In solchen Fällen spricht man dann von einem sogenannten Spannungsschwellenwert, bei dem der elektrische Widerstand abrupt einbricht. Wesentlich für die Erfindung ist andererseits, dass diese Anregbarkeit (bevorzugt also der Spannungsschwellenwert) allerdings keine konstante Größe darstellt, sondern sich mit der Zeit nach einem ersten Anregungssignal, in der sich das Halbleitermaterial in einem Zustand mit geringer Leitfähigkeit befindet, ändert (s. Figur 1).

Liegt das zweite Signal über dem Spannungsschwellenwert, der zu diesem Zeitpunkt überschritten werden muss, kommt es zu einer Anregung des amorphen Halbleitermaterials in einen temporär besser leitfähigen Zustand. Bei einem Signal mit einer Stärke unterhalb des Spannungsschwellenwertes unterbleibt die Anregung, das amorphe Halbleitermaterial weist unverändert eine geringe Leitfähigkeit auf.

Durch die Tatsache, dass der Spannungsschwellenwert mit der Zeit ansteigt (s. Figur 1) kann nun die Zeitdifferenz zwischen zwei Signalen ermittelt werden und, da sie mit einer elektronisch relevanten Materialveränderung einhergeht, auch zur Modellierung von Lernprozessen genutzt werden. Ebenso wie bei den Nervenzellen durch zeitlich nah aufeinanderfolgende Aktionspotentiale die synaptische Verbindung verstärkt wird, so wird bei der erfindungsgemäß verwendbaren Vorrichtung das amorphe Halbleitermaterial in seiner Leitfähigkeit vorübergehend verändert und kann so zu einer permanenten Veränderung in einem nachgeschalteten memristiven Element führen.

Eine erfindungsgemäßes Verfahren zur Auswertung eines Zeitintervalls zwischen zwei Anregungen gemäß Anspruch 1 kann mindestens ein anregbares Material umfassen, welches durch eine Anregung zumindest teilweise in einen angeregten Zustand gebracht werden kann, wobei sich die Anregbarkeit des Materials in diesem angeregten Zustand mit der Zeit verändert.

Dabei kann die bei dem erfindungsgemäßen Verfahren verwendete Vorrichtung mindestens ein anregbares Material umfassen, welches durch eine Anregung zumindest teilweise anhaltend in einen angeregten Zustand gebracht werden kann, wobei sich die Anregbarkeit des Materials in diesem angeregten Zustand mit der Zeit verändert.

Eine Anregung kann dabei insbesondere zum Beispiel eine elektrische Anregung sein. Mit Anregbarkeit kann dementsprechend zum Beispiel die elektrische Anregbarkeit gemeint sein.

Eine Anregung kann gegebenenfalls zum Beispiel durch eine elektrische Anregung, durch elektromagnetische Strahlung oder durch Erwärmen beziehungsweise Erreichen einer bestimmten Temperatur erfolgen.

Das anregbare Material ist erfindungsgemäß ein anregbares Halbleitermaterial beziehungsweise ein elektrisch anregbares Halbleitermaterial, welches durch Elektrizität beziehungsweise durch eine elektrische Anregung zumindest teilweise in einen angeregten amorphen Zustand gebracht werden kann. Ein angeregter beziehungsweise amorpher oder teilkristalliner Zustand kann ein angeregter und insbesondere ein amorpher oder teilkristalliner Zustand sein. Ein teilkristalliner Zustand kann zum Beispiel ein Zustand sein, bei dem das Material nur unvollständig kristallisiert ist. Ein solcher Zustand kann daher auch unvollständig amorph sein Ein Zustand kann dabei gegebenenfalls zum Beispiel auch nur einen Teil des entsprechenden Materials betreffen, insbesondere ein unmittelbar an einer Elektrode (die zum Anlegen einer Anregung beziehungsweise eines Signals verwendet werden kann) angrenzender Teil des Materials. In diesem Zustand kann sich die Anregbarkeit beziehungsweise die elektrische Anregbarkeit des Materials mit der Zeit verändern. Dies kann zum Beispiel bedeuten, dass sich die Anregbarkeit beziehungsweise die elektrische Anregbarkeit des Materials durch eine weitere/spätere Anregung beziehungsweise elektrische Anregung im angeregten Zustand, welcher insbesondere ein amorpher Zustand sein kann, mit der Zeit verändert. Dass die Anregbarkeit sich mit der Zeit verändert, kann dabei zum Beispiel bedeuten, dass die weitere Anregbarkeit nach einer ersten Anregung, insbesondere durch ein erstes/früheres Signal, sich mit der Zeit beziehungsweise mit fortschreitender Zeit verändert.

Die bei dem erfindungsgemäßen Verfahren verwendete Vorrichtung zur Auswertung eines Zeitintervalls zwischen zwei Anregungen kann demnach ein elektrisch anregbares Halbleitermaterial umfassen, welches durch eine Anregung, insbesondere eine elektrische Anregung, in einen amorphen Zustand gebracht werden kann, wobei sich die elektrische Anregbarkeit des Halbleitermaterials in diesem amorphen Zustand mit der Zeit verändert.

Eine elektrische Anregung kann zum Beispiel durch mindestens einen elektrischen Impuls/Puls beziehungsweise durch mindestens ein elektrisches Signal erreicht werden. Dabei kann die elektrische Stromstärke, die elektrische Spannung und/oder die Dauer eines zur Anregung verwendeten Impulses/Pulses beziehungsweise Signals variiert werden. Ein Signal oder Impuls/Puls beziehungsweise ein elektrisches Signal beziehungsweise ein elektrischer Impuls/Puls kann somit eine Anregung darstellen.

Eine bestimmte elektrische Stromstärke und/oder eine bestimmte elektrische Spannung kann (können) zum Beispiel verwendet werden, um eine elektrische Anregung zu erreichen.

Der angeregte Zustand ist erfindungsgemäß ein temporärer beziehungsweise nicht anhaltender Zustand, der nur bei andauernder Anregung beziehungsweise für die Dauer einer Anregung erreicht werden kann beziehungsweise vorhält. Dies kann insbesondere zutreffen, wenn ein angeregter Zustand zum Beispiel ein energetisch höherer Zustand und/oder ein elektronisch angeregter(er) Zustand, ein elektrisch schlechter leitenden oder ein elektrisch besser leitender Zustand ist. Alternativ dazu kann ein angeregter Zustand nach einer Anregung beziehungsweise einer elektrischen Anregung zumindest eine Zeit lang anhalten kann oder angeregt bleiben kann, insbesondere zum Beispiel während der Relaxationszeit. Dies kann insbesondere zum Beispiel der Fall sein, wenn ein angeregter Zustand zum Beispiel ein amorpher oder teilkristalliner Zustand ist. Ein anhaltender angeregter Zustand kann sich demnach, insbesondere bis zu einer weiteren Anregung beziehungsweise einem weiteren Signal, nur relativ langsam verändern und während der Relaxationszeit in einem sich gegebenenfalls ändernden angeregten Zustand bleiben. Gegebenenfalls kann danach erst eine Rückkehr zu einem nicht angeregten Zustand erfolgen.

Dass die Anregbarkeit beziehungsweise die elektrische Anregbarkeit des anregbaren Halbleitermaterials sich mit der Zeit verändert, bedeutet, dass die Fähigkeit des anregbaren Materials oder des anregbaren Halbleitermaterials durch eine bestimmte Anregung beziehungsweise durch eine elektrische Anregung in einen bestimmten Materialzustand gebracht zu werden, sich mit der Zeit verändert. Dies bedeutet, dass die Anregbarkeit beziehungsweise die elektrische Anregbarkeit in diesem Zustand mit der Zeit abnimmt.. Die Anregbarkeit ist demnach die Fähigkeit, das anregbare Halbleitermaterial zu verändern, insbesondere zum Beispiel auch durch eine weitere Anregung beziehungsweise eine weitere elektrische Anregung.

Das anregbare Halbleitermaterial kann dabei zum Beispiel durch eine (erste/frühere) Anregung beziehungsweise elektrische Anregung von einem kristallinen Zustand zumindest teilweise anhaltend in einen angeregten amorphen Zustand gebracht werden. Dabei verändert sich die elektrische Anregbarkeit des anregbaren Halbleitermaterials im angeregten amorphen Zustand, in den es durch die elektrische Anregung gebracht wurde mit der Zeit.

Durch Veränderung der Anregbarkeit mit verstreichender Zeit kann es immer schwieriger werden, das bereits durch eine erste Anregung angeregte, amorphe Halbleitermaterial zum Beispiel elektrisch (durch eine zweite Anregung beziehungsweise elektrische) zumindest teilweise in einen anderen Materialzustand, nämlich in einen elektrisch besser leitenden Zustand, zu bringen. Somit kann eine Veränderung des amorphen Halbleitermaterials in Abhängigkeit der verstrichenen Zeit durch eine zweite Anregung, insbesondere eine zweite elektrische Anregung, entweder noch erfolgen oder nicht.

Die Wahrscheinlichkeit, eine Veränderung des angeregten amorphen Halbleitermaterials mit einer zweiten Anregung auslösen zu können, kann mit der Zeit abnehmen, wenn die Anregbarkeit, insbesondere die elektrische Anregbarkeit, mit der Zeit abnimmt. Dies trifft insbesondere zum Beispiel zu, wenn die zweite Anregung sich mit der Zeit nicht verändert.

Eine zweite Anregung beziehungsweise eine zweite elektrische Anregung beziehungsweise ein zur Anregung verwendetes Signal beziehungsweise ein zweites Signal kann ein Signal sein, welches an ein angeregtes amorphes Halbleitermaterial angelegt wird, das durch eine erste Anregung beziehungsweise ein erstes Signal zumindest teilweise in einen angeregten amorphen Zustand gebracht wurde. Eine zweite Anregung beziehungsweise eine zweite elektrische Anregung beziehungsweise ein zur Anregung verwendetes Signal beziehungsweise ein zweites Signal kann sich zum Beispiel mit der Zeit beziehungsweise über die Dauer der Anregung beziehungsweise des Signals gegebenenfalls nicht ändern. Eine zweite Anregung beziehungsweise ein zweites Signal kann dabei zum Bespiel eine weitere Anregung beziehungsweise ein weiteres Signal darstellen, welche/welches auf mindestens eine erste Anregung beziehungsweise mindestens ein erstes Signal folgen kann. Eine erste Anregung beziehungsweise ein erstes Signal kann dabei zum Bespiel eine frühere Anregung beziehungsweise ein früheres Signal darstellen, welche/welches zum Beispiel vor einer zweiten Anregung beziehungsweise einem zweiten Signal erfolgt.

Somit kann sich gegebenenfalls auswerten lassen, wie viel Zeit zwischen einer ersten Anregung und einer zweiten Anregung beziehungsweise zwischen dem Eingehen eines ersten Signals (Resetpuls) und dem Eingehen eines zweiten Signals vergangen ist. Dementsprechend kann das Zeitintervall zwischen den zwei Anregungen beziehungsweise Signalen ausgewertet werden, um gegebenenfalls darauf aufbauend ein STDP-Verhalten zu realisieren.

Das erfindungsgemäß verwendete anregbare Halbleitermaterial ist ein Material, bei dem ein Phasenwechsel durch eine elektrische Anregung erfolgt. Ein solcher Phasenwechsel kann gegebenenfalls auch relativ langsam erfolgen und zum Beispiel mehr als 1 µs dauern, bevorzugt mehr als 5 µs, weiter bevorzugt mehr als 10 µs.

Für Materialien, bei denen ein Phasenwechsel relativ langsam erfolgt, kann zum Beispiel der Zustand beziehungsweise der Materialzustand durch eine Anregung, insbesondere eine elektrische Anregung, feiner eingestellt werden, um somit gegebenenfalls mehr Möglichkeiten zu erhalten, den Widerstand solcher Materialien beeinflussen zu können.

Dadurch kann gegebenenfalls durch Auswertung des Zeitintervalls zwischen zwei Anregungen beziehungsweise zwischen zwei Signalen zum Beispiel ein graduelles STDP-Verhalten erreicht werden, bei dem der Widerstand einer künstlichen Synapse umso mehr reduziert wird, je kürzer das Zeitintervall zwischen den zwei Signalen ist, und/oder umso mehr erhöht wird, je länger das Zeitintervall zwischen den zwei Signalen ist. Im Gegensatz dazu kann die Verwendung von Materialien, bei denen ein Phasenwechsel relativ schnell erfolgt, dazu führen, dass durch Auswertung des Zeitintervalls zwischen zwei Anregungen beziehungsweise zwischen zwei Signalen gegebenenfalls ein STDP-Verhalten erreicht werden kann, bei dem der Widerstand einer künstlichen Synapse reduziert wird, wenn das Zeitintervall zwischen zwei Signalen unter einem Schwellenwert für das Zeitintervall, liegt und/oder der Widerstand einer künstlichen Synapse erhöht wird, wenn das Zeitintervall zwischen zwei Signalen über einem Schwellenwert für das Zeitintervall liegt.

Ein erfindungsgemäß verwendetes Halbleitermaterial ist daher zum Beispiel ein Phasenwechselmaterial, welches durch eine erste elektrische Anregung in einen amorphen Zustand gebracht werden kann. Dadurch wird das Phasenwechselmaterial im angeregten amorphen Zustand durch eine zweite Anregung beziehungsweise elektrische Anregung von einem elektrisch schlechter leitenden amorphen Zustand in einen elektrisch besser leitenden Zustand gebracht.

Das Phasenwechselmaterial kann durch eine elektrische Anregung in Form des Anlegens einer Spannung zumindest teilweise in einen amorphen Zustand gebracht werden. Dazu kann zum Beispiel ein kurzes Signal mit einer hohen Spannung oder einer hohen Stromstärke verwendet werden. Dabei kann das Material dadurch zumindest teilweise erwärmt und schnell wieder abgekühlt werden. Dadurch kann das vorgenannte Halbleitermaterial gegebenenfalls zum Beispiel in einem unmittelbar an einer Elektrode angrenzenden Bereich anhaltend in einen amorphen Zustand gebracht werden, der insbesondere zum Beispiel im Vergleich zu einem ersten/vorherigen Zustand einen höheren elektrischen Widerstand aufweisen kann. Die Elektrode kann dabei insbesondere zum Beispiel eine Elektrode sein, die zum Anlegen einer Anregung beziehungsweise eines Signals an einer erfindungsgemäß verwendbaren Vorrichtung verwendet werden kann. Anhaltend kann dabei insbesondere zum Beispiel durch eine Veränderung des Kristallinen Zustands des Materials erreicht und/oder sich zumindest bis zu einer weiteren Anregung beziehungsweise bis zu einem weiteren Signal nur relativ langsam verändernd bedeuten. Dies kann durch ein Signal beziehungsweise durch ein erfindungsgemäßes erstes Signal erfolgen, dass zum Beispiel Resetpuls genannt werden kann. Dies kann zum Beispiel als Initialisierung einer erfindungsgemäß verwendbaren Vorrichtung gesehen werden. Die Dauer, die Spannung und die Stromstärke des dafür verwendeten Signals kann dabei zum Beispiel in Abhängigkeit zum verwendeten Material und/oder zur Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung gewählt beziehungsweise eingestellt werden.

Das Phasenwechselmaterial kann dabei zudem durch Anlegen einer bestimmten Spannung, die einen Spannungsschwellenwert übersteigt, von einem angeregten amorphen schlechter leitenden Zustand zumindest teilweise in einen elektrisch besser leitenden Zustand gebracht werden, welcher insbesondere zum Beispiel im Vergleich zu einem ersten Zustand einen geringeren elektrischen Widerstand aufweisen kann. Dieser elektrisch besser leitende Zustand kann dabei auch ein temporärer beziehungsweise nicht permanenter Zustand sein, der nur bei anhaltender Anregung beziehungsweise für die Dauer eines Signals erreicht werden kann. Zumindest teilweise in einen Zustand gebracht werden, kann zum Beispiel bedeuten, dass mindestens ein Teil eines Materials und insbesondere mindestens ein unmittelbar an einer Elektrode angrenzender Teil eines Materials in diesen Zustand gebracht wird. Die Elektrode kann dabei insbesondere zum Beispiel eine Elektrode sein, die zum Anlegen einer Anregung beziehungsweise eines Signals an einer erfindungsgemäß verwendbaren Vorrichtung verwendet werden kann.

Ein schlechter oder besser leitender Zustand kann dabei zumindest einen Teil eines entsprechenden Materials und insbesondere mindestens einen unmittelbar an einer Elektrode (die zum Anlegen einer Anregung beziehungsweise eines Signals an einer erfindungsgemäß verwendbaren Vorrichtung verwendet werden kann) angrenzenden Teil dieses Materials betreffen. Dies kann durch ein Signal beziehungsweise durch ein erfindungsgemäßes zweites/weiteres/späteres Signal erfolgen. Die Dauer, die Spannung und die Stromstärke des dafür verwendeten Signals kann dabei zum Beispiel in Abhängigkeit zum verwendeten Material und/oder zur Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung gewählt beziehungsweise eingestellt werden.

Die dabei für einen Wechsel von einem angeregten amorphen schlechter leitenden Zustand zu einen elektrisch besser leitenden Zustand benötigte Zeit kann dabei zum Beispiel von der Höhe der angelegten Spannung abhängen. Je höher die angelegte Spannung über dem Spannungsschwellenwert liegt, desto schneller kann ein Wechsel erfolgen. Je näher die angelegte Spannung am Spannungsschwellenwert liegt, desto langsamer kann ein Wechsel erfolgen. Sofern eine Spannung verwendet wird, die nah am Spannungsschwellenwert liegt, kann dadurch ein Wechsel gegebenenfalls verzögert werden. In diesem Zusammenhang kann ein erfindungsgemäß verwendetes anregbares Halbleitermaterial ein Signal und oder mehrere Signale, welche(s) über dem Spannungsschwellenwert liegen, gegebenenfalls integrieren. Dies kann zum Beispiel bedeuten, dass ein gegebenenfalls auch mehrere Signale und/oder durch mehrere Teile von Signalen, die integriert zu einem Wechsel führen können, zu einem Wechsel beitragen können.

Dadurch kann eine erfindungsgemäß verwendbare Vorrichtung gegebenenfalls durch Auswertung des Zeitintervalls zwischen zwei Anregungen beziehungsweise zwischen zwei Signalen zum Beispiel auch dazu beitragen, dass ein graduelles STDP-Verhalten erreicht werden kann, bei dem der Widerstand einer künstlichen Synapse umso mehr reduziert wird, je kürzer das Zeitintervall zwischen den zwei Signalen ist, und/oder umso mehr erhöht wird, je länger das Zeitintervall zwischen den zwei Signalen ist.

Der Spannungsschwellenwert des Phasenwechselmaterials kann sich dabei im angeregten amorphen Zustand, in den es durch eine Anregung beziehungsweise eine elektrische Anregung zumindest teilweise gebracht wurde, mit der Zeit verändern. Man spricht in diesem Zusammenhang auch von einem Driften des Spannungsschwellenwerts des Materials beziehungsweise des Halbleitermaterials. Dabei kann der Spannungsschwellenwert insbesondere mit der Zeit ansteigen . Bevorzugt kann der Spannungsschwellenwert zum Beispiel mit der Zeit ansteigen. Durch diese Veränderung des Spannungsschwellenwerts mit der Zeit verändert sich die Anregbarkeit beziehungsweise die elektrische Anregbarkeit des Materials im angeregten beziehungsweise im amorphen Zustand. Die elektrische Anregbarkeit kann dabei mit der Zeit abnehmen, wenn der Spannungsschwelwert mit der Zeit zunimmt.

In der Tat kann es durch das Driften des Spannungsschwellenwerts mit verstreichender Zeit immer schwieriger werden, das bereits durch eine erste elektrische Anregung angeregte amorphe Material zum Beispiel elektrisch zumindest teilweise in einen anderen bestimmten Materialzustand, nämlich zum Beispiel einem kristallinen oder einem anderen teilkristallinen Zustand mit einem geringeren Widerstand zu bringen. Somit kann eine Veränderung des amorphen Materials in Abhängigkeit der verstrichenen Zeit durch eine zweite elektrische Anregung entweder noch erfolgen oder nicht.

Die Wahrscheinlichkeit, eine Veränderung mit einem erfindungsgemäßen zweiten Signal auslösen zu können, nimmt erfindungsgemäß mit der Zeit ab, insofern der Spannungsschwellenwert mit der Zeit zunimmt. Somit kann sich gegebenenfalls auswerten lassen, wie viel Zeit zwischen dem Eingehen eines ersten Signals (Resetpuls) und dem Eingehen eines zweiten/weiteren/späteren Signals vergangen ist. Dementsprechend kann das Zeitintervall zwischen den zwei Signalen ausgewertet werden.

Dadurch kann sich gegebenenfalls auswerten lassen, wie viel Zeit zwischen dem Eingehen eines ersten Signals (Resetpuls) und dem Eingehen eines zweiten Signals vergangen ist. Dementsprechend kann das Zeitintervall zwischen den zwei Anregungen beziehungsweise Signalen ausgewertet werden, um gegebenenfalls darauf aufbauend ein STDP-Verhalten zu realisieren.

In einer Ausführungsform einer erfindungsgemäß verwendbaren Vorrichtung zur Auswertung eines Zeitintervalls zwischen zwei Anregungen beziehungsweise zwei Signalen kann die Vorrichtung zum Beispiel derart ausgestaltet sein, dass ein elektrisch anregbares Halbleitermaterial durch erstes Signal anhaltend zumindest teilweise in einen amorphen Zustand gebracht werden kann, wobei die elektrische Anregbarkeit des Halbleitermaterials im angeregten amorphen Zustand sich mit der Zeit verändert und das Halbleitermaterial in diesem angeregten beziehungsweise amorphen Zustand durch ein zweites Signal zumindest teilweise temporär zu einem Wechsel von einem elektrisch schlechter leitenden zu einem elektrisch besser leitenden Zustand gebracht werden kann, wobei ferner der Wechsel in Abhängigkeit der Veränderung der Anregbarkeit des Halbleitermaterials im angeregten amorphen Zustand erfolgt.

Ein angeregter amorpher kann dabei zumindest ein Teil eines entsprechenden Materials und insbesondere mindestens einen unmittelbar an einer Elektrode, angrenzenden Teil dieses Materials betreffen. Diese Elektrode kann insbesondere zum Beispiel eine Elektrode sein, die zum Anlegen einer Anregung beziehungsweise eines Signals an einer erfindungsgemäß verwendbaren Vorrichtung verwendet werden kann.

Es wird erfindungsgemäß mit zunehmender Zeit schwieriger, eine Veränderung mit einem erfindungsgemäßen zweiten Signal auszulösen. Die Wahrscheinlichkeit, eine Veränderung mit einem erfindungsgemäßen zweiten Signal auslösen zu können, wird mit der Zeit abnehmen, wenn die Anregbarkeit mit der Zeit abnimmt.

Somit kann sich gegebenenfalls auswerten lassen, wie viel Zeit zwischen dem Eingehen eines ersten Signals (Resetpuls) und dem Eingehen eines zweiten/weiteren/späteren Signals vergangen ist. Dementsprechend kann das Zeitintervall zwischen den zwei Signalen ausgewertet werden.

Ein Wechsel erfolgt dabei erfindungsgemäß in Abhängigkeit der Veränderung der Anregbarkeit des Halbleitermaterials im angeregten amorphen Zustand nur, sofern die elektrische Anregbarkeit sich im Zeitintervall zwischen dem ersten und dem zweiten Signal nicht so stark verändert hat, dass das zweite Signal nicht mehr für eine Anregung ausreicht beziehungsweise nicht mehr ausreicht, um das Halbleitermaterial im angeregten amorphen Zustand durch ein zweites Signal zumindest teilweise zu einem Wechsel von einem elektrisch schlechter leitenden zu einem elektrisch besser leitenden Zustand zu bringen.

Das Zeitintervall, in dem die Voraussetzung für einen Wechsel des Halbleitermaterials im angeregten amorphen Zustand von einem schlechter leitenden Zustand zu einem besser leitenden Zustand durch ein erfindungsgemäßes zweites Signal noch erfüllt wird, kann dabei zum Beispiel vom verwendeten Halbleitermaterial und/oder von der Temperatur und/oder der/den verwendeten Anregung(en) beziehungsweise dem/den verwendeten Signal(en) abhängen.

Ein elektrisch schlechter leitender Zustand kann dabei im Sinne der Erfindung zum Beispiel ein/jeder Zustand sein, der im Gegensatz zu einem elektrisch besser leitenden Zustand einen messbar höheren Widerstand aufweist. Ein elektrisch schlechter leitender Zustand kann dabei insbesondere zum Beispiel ein/jeder Zustand sein, der im Gegensatz zu einem elektrisch besser leitenden Zustand einen um eine Größenordnung, bevorzugt um zwei Größenordnungen, weiter bevorzugt um drei Größenordnungen, weiter bevorzugt um vier Größenordnungen, besonders bevorzugt um fünf Größenordnungen, höheren Widerstand aufweist.

Durch eine erfindungsgemäß verwendbare Vorrichtung kann demnach das Zeitintervall zwischen zwei Signalen, die an der Vorrichtung ankommen, einfach und bequem ausgewertet werden, um zum Beispiel festzustellen, ob dieses Zeitintervall einen bestimmten Wert überschreitet. Damit kann zum Beispiel bequem festgestellt werden, ob zwischen den zwei Signalen eine Korrelation besteht, um gegebenenfalls darauf aufbauend ein STDP-Verhalten zu realisieren.

In einer für das erfindungsgemäße Verfahren verwendeten Vorrichtung kann ein verwendetes anregbares Halbleitermaterial oder ein elektrisch anregbares Halbleitermaterial mindestens ein Element der Gruppen III und/oder IV A und/oder VA und/oder VIA des Periodensystems umfassen.

In einer Ausführungsform einer erfindungsgemäß verwendbaren Vorrichtung kann ein anregbares Material beziehungsweise ein anregbares Halbleitermaterial oder ein elektrisch anregbares Halbleitermaterial zum Beispiel mindestens ein Chalkogenid, insbesondere ein amorphes Chalkogenid und/oder ein zum Beispiel durch Substitution und/oder Dotierung modifiziertes Chalkogenid umfassen.

In einer Ausführungsform einer erfindungsgemäß verwendbaren Vorrichtung kann ein anregbares Material beziehungsweise ein anregbares Halbleitermaterial oder ein elektrisch anregbares Halbleitermaterial zum Beispiel ausgewählt werden aus der Gruppe, die folgende beispielhafte Materialien umfasst: Ge₂S_{b}2Te₅,Ag₅In₅Sb₅₀Te₃₀, GeTe, GeTe₆, GeSb, GaSb.

Dadurch lassen sich Halbleitermaterialien mit geeigneten Materialeigenschaften erhalten, insbesondere zum Beispiel bezüglich der elektrischen Anregbarkeit und/oder eines möglichen Wechsels von einem amorphen schlechter leitenden Zustand zu einem elektrisch besser leitenden Zustand durch eine geeignete elektrische Anregung beziehungsweise gegebenenfalls durch ein erfindungsgemäßes zweites Signal.

Erfindungsgemäß ist das anregbare Halbleitermaterial oder elektrisch anregbare Halbleitermaterial ein Phasenwechselmaterial (PCM), welches zum Beispiel durch eine elektrische Spannung anregbar ist, wobei das Phasenwechselmaterial im angeregten beziehungsweise amorphen Zustand durch eine Spannung anregbar ist, die über einem Spannungsschwellenwert liegt, wobei der Spannungsschwellenwert des Phasenwechselmaterials im amorphen Zustand und somit die elektrische Anregbarkeit dieses Materials sich mit der Zeit verändert.

Ein Phasenwechselmaterial (PCM) kann dabei insbesondere zum Beispiel ein amorphes Chalkogenid und/oder ein modifiziertes Chalkogenid umfassen, zum Beispiel durch Substitution und/oder Dotierung. Ein Phasenwechselmaterial (PCM) kann insbesondere zum Beispiel auch ein Material sein, bei dem ein Wechsel von einem amorphen schlechter leitenden Zustand zu einem besser leitenden Zustand bei Anlegen einer Spannung, die über dem Spannungsschwellenwert liegt, in weniger als 1 µs, bevorzugt in zwischen 1 ns und 100 ns, besonders bevorzugt in weniger als 1 ns, erfolgen kann.

Die für einen Wechsel benötigte Zeit kann dabei zum Beispiel von der Höhe der angelegten Spannung abhängen. Je höher die angelegte Spannung über dem Spannungsschwellenwert liegt, desto schneller kann ein Wechsel erfolgen. Je näher die angelegte Spannung am Spannungsschwellenwert liegt, desto langsamer kann ein Wechsel erfolgen. Sofern eine Spannung verwendet wird, die nah am Spannungsschwellenwert liegt, kann dadurch ein Wechsel gegebenenfalls verzögert werden. In diesem Zusammenhang kann ein erfindungsgemäß verwendetes anregbares Material beziehungsweise anregbares Halbleitermaterial ein Signal und oder mehrere Signale, welche(s) über dem Spannungsschwellenwert liegen, gegebenenfalls integrieren.

Durch die Verwendung eines Phasenwechselmaterials (PCM) kann zum Beispiel insbesondere ein schneller Wechsel erfolgen. Dadurch können die Signale, die Verarbeitet werden müssen, zum Beispiel zeitlich kürzer aufeinander folgen. Somit kann gegebenenfalls eine hohe Verarbeitungsgeschwindigkeit beziehungsweise ein hoher Datendurchsatz erreicht werden.

In einer Ausführungsform einer erfindungsgemäß verwendbaren Vorrichtung kann die Vorrichtung zum Beispiel elektrisch mit mindestens einem memristiven Element verbunden sein, um den Zugang dazu zu steuern.

Ein memristives Element kann insbesondere zum Beispiel jedes Element mit einem elektrisch veränderbaren Widerstand sein. Ein memristives Element kann dabei insbesondere zum Beispiel ein Phasenwechselmaterial umfassen. In der Tat können entsprechende Materialien zum Beispiel durch mindestens ein elektrisches Signal von mindestens einem amorphen oder teilkristallinen Zustand mit einem höheren Widerstand, insbesondere zum Beispiel anhaltend, in mindestens einen kristallinen oder einen anderen teilkristallinen Zustand mit einem geringeren elektrischem Widerstand oder von mindestens einen kristallinen oder teilkristallinen Zustand mit einem geringeren Widerstand, insbesondere zum Beispiel anhaltend, in einen amorphen oder einen anderen teilkristalline Zustand mit einem höheren Widerstand gebracht werden. Ein Phasenwechselmaterial kann somit ein Beispiel eines memristiven Elements darstellen.

Weitere Beispiele eines memristiven Elements können zum Beispiel eine Pt/TiO₂/RiO₂-x/Pt-Schichtanordnung und/oder eine "Ag in Si"-Schicht (siehe Nano Lett. 2010, 10, 1297-1301) umfassen, da der Widerstand entsprechender Schichten und/oder Elemente ebenfalls elektrisch veränderbar ist. Eine Pt/TiO₂/RiO₂-x/Pt - Schichtanordnung und/oder eine "Ag in Si"-Schicht kann/können daher ebenfalls Beispiele eines memristiven Elements darstellen.

Ein memristives Element kann zum Beispiel in Serie und/oder parallel zu einer erfindungsgemäßen Vorrichtung geschaltet sein.

Eine erfindungsgemäß verwendbare Vorrichtung ist dabei bevorzugt zum Beispiel so angeordnet, dass sie den Zugang zu mindestens einem memristiven Element steuert. Dazu kann eine erfindungsgemäße Vorrichtung gegebenenfalls in geeigneter Weise mit einem memristiven Element verbunden sein.

Dass eine erfindungsgemäß verwendbare Vorrichtung den Zugang zu einem damit verbundenen memristiven Element steuert, kann zum Beispiel bedeuten, dass eine erfindungsgemäß verwendbare Vorrichtung den Widerstand regelt, der zu überwinden ist, um auf ein memristives Element zugreifen beziehungsweise dessen Widerstand elektrisch gegebenenfalls ändern zu können. Dies kann insbesondere zum Beispiel zutreffen, wenn eine erfindungsgemäß verwendbare Vorrichtung in Serie mit einem memristiven Element verbunden ist, wobei dessen Zugang durch die Vorrichtung gesteuert werden kann. Dabei kann eine Veränderung des Widerstands eines memristiven Elements zum Beispiel ermöglicht und/oder vereinfacht werden, wenn der Widerstand einer erfindungsgemäß verwendbaren Vorrichtung reduziert wird beziehungsweise wenn das Zeitintervall zwischen zwei Anregungen beziehungsweise zwei Signalen unter einem bestimmten Wert liegt. Im Gegensatz dazu kann eine Veränderung des Widerstands eines memristiven Elements zum Beispiel verhindert und/oder erschwert werden, wenn der Widerstand einer erfindungsgemäß verwendbaren Vorrichtung erhöht wird oder unverändert hoch bleibt beziehungsweise wenn das Zeitintervall zwischen zwei Anregungen beziehungsweise zwei Signalen über einem bestimmten Wert liegt.

Dass eine erfindungsgemäß verwendbare Vorrichtung den Zugang zu einem damit verbundenen memristiven Element steuert, kann zum Beispiel bedeuten, dass eine erfindungsgemäß verwendbare Vorrichtung den Zugang zu einem damit verbundenen memristiven Element zum Beispiel über/durch einen Transistor steuert, wobei der Widerstand eines Transistors und/oder der über/durch den Transistor durchgelassene Teil/Strom (zum Beispiel Stromstärke und/oder Spannung und/oder Dauer) eines zweiten Signals in Abhängigkeit einer erfindungsgemäß verwendbaren Vorrichtung beziehungsweise in Abhängigkeit des von einer erfindungsgemäß verwendbaren Vorrichtung durchgelassenen Teils/Stroms eines zweiten Signals (zum Beispiel Stromstärke und/oder Spannung und/oder Dauer) verändert werden kann. Ein Transistor kann dabei im Bezug auf das memristive Element vorgeschaltet oder nachgeschaltet sein. Der Transistor kann dabei auch derart ausgestaltet sein, dass mindestens ein Teil jeder Anregung beziehungsweise jedes Signals durchgelassen wird ("leaky Transistor").

Dadurch kann eine Veränderung des Widerstands eines memristiven Elements zum Beispiel ermöglicht und/oder vereinfacht werden, wenn zum Beispiel der Widerstand einer erfindungsgemäß verwendbaren Vorrichtung reduziert wird beziehungsweise wenn das Zeitintervall zwischen zwei Anregungen beziehungsweise zwei Signalen unter einem bestimmten Wert liegt.

Alternativ kann eine Veränderung des Widerstands eines memristiven Elements zum Beispiel ermöglicht und/oder vereinfacht werden, wenn der Widerstand einer erfindungsgemäß verwendbaren Vorrichtung erhöht wird oder erhöht bleibt. Dabei kann eine Veränderung des Widerstands eines memristiven Elements zum Beispiel verhindert und/oder erschwert werden, wenn der Widerstand einer erfindungsgemäß verwendbaren Vorrichtung reduziert wird. Der Widerstand einer erfindungsgemäß verwendbaren Vorrichtung kann dann erhöht bleiben oder erhöht werden, wenn das Zeitintervall zwischen zwei Anregungen beziehungsweise zwei Signalen zu lang/groß ist, damit die zweite Anregung beziehungsweise das zweite Signal das angeregte amorphe Halbleitermaterial noch temporär zumindest teilweise von einem elektrisch schlechter leitenden Zustand in einen elektrisch besser leitenden Zustand bringen kann. Dies kann insbesondere zum Beispiel zutreffen, wenn eine erfindungsgemäß verwendbare Vorrichtung parallel mit einem memristiven Element verbunden/geschaltet ist, wobei dessen Zugang durch die Vorrichtung gesteuert werden kann.

Dadurch kann das Erhöhen oder Reduzieren des Widerstands einer künstlichen Synapse gegebenenfalls durch eine elektrische Veränderung des Widerstands des memristiven Elements ermöglicht werden, um die Verbindung durch diese künstliche Synapse zu verbessern oder zu verschlechtern beziehungsweise das Gewicht dieser Synapse zu verändern und somit in Abhängigkeit der zeitlichen Korrelation zwischen Anregungen beziehungsweise elektrischen Anregungen ein STDP-Verhalten zu realisieren. Eine künstliche Synapse kann dabei zum Beispiel eine Vorrichtung sein, die das Verhalten einer natürlichen Synapse nachahmen kann. Eine erfindungsgemäße künstliche Synapse kann dabei insbesondere zum Beispiel mindestens eine erfindungsgemäß verwendbare Vorrichtung zur Auswertung eines Zeitintervalls zwischen zwei Signalen umfassen.

Bei einem memristiven Element, welches ein Phasenwechselmaterial umfasst, kann eine Reduzierung des Widerstands insbesondere zum Beispiel anhaltend durch einen Wechsel von einem amorphen oder teilkristallinen Zustand, in den das memristive Element bei einem Reset gebracht wurde, zu einem besser leitenden kristallinen oder einem anderen besser leitendem teilkristallinen Zustand erfolgen, insbesondere zum Beispiel wenn eine zweite Anregung beziehungsweise ein zweites Signal innerhalb eines bestimmten Zeitintervalls an einer erfindungsgemäß verwendbaren Vorrichtung ankommt beziehungsweise angelegt wird. Zudem kann eine Reduzierung des Widerstands insbesondere zum Beispiel auch anhaltend durch einen Wechsel von einem teilkristallinen oder kristallinen Zustand, in den das memristive Element bei einem Set gebracht wurde, zu einem besser leitenden anderen kristallinen oder einem anderen besser leitenden teilkristallinen Zustand erfolgen, insbesondere zum Beispiel wenn eine zweite Anregung beziehungsweise ein zweites Signal innerhalb eines bestimmten Zeitintervalls an einer erfindungsgemäßen Vorrichtung ankommt beziehungsweise angelegt wird.

Bei einem memristiven Element, welches ein Phasenwechselmaterial umfasst, kann eine Erhöhung des Widerstands insbesondere zum Beispiel anhaltend durch eine Veränderung von einem kristallinen oder teilkristallinen Zustand, in den das memristive Element bei einem Set gebracht wurde, zu einem schlechter leitenden amorphen teilkristallinen Zustand erfolgen, insbesondere zum Beispiel wenn eine zweite Anregung beziehungsweise ein zweites Signal nicht innerhalb eines bestimmten Zeitintervalls an einer erfindungsgemäß verwendbaren Vorrichtung ankommt beziehungsweise angelegt wird.

Ein Reset und/oder ein Set eines memristiven Elements kann dabei durch einen Teil eines erfindungsgemäßen ersten/früheren und/oder einen Teil eines erfindungsgemäßen zweiten/weiteren/späteren Signals erfolgen, der/die über/durch eine erfindungsgemäß verwendbare Vorrichtung zu einem memristiven Element gelangt. Bevorzugt kann ein Set dabei zum Beispiel durch ein zweites Signal und/oder durch einen Teil davon erfolgen. Ein Wechsel des Zustands des Materials kann insbesondere zum Beispiel durch ein zweites Signal und/oder durch einen Teil davon ausgelöst werden. In diesem Fall kann der Setpuls zum Beispiel das zweite Signal oder ein Teil davon sein.

In einer Ausführungsform kann ein Teil eines erfindungsgemäß verwendbaren zweiten Signals, welcher über/durch eine erfindungsgemäß verwendbare Vorrichtung zum einem damit verbundenen memristiven Element gelangt, dessen Zugang durch die Vorrichtung gesteuert wird, in jedem Fall zu einer leichten Erhöhung des Widerstands dieses memristiven Elements führen, zum Beispiel durch eine gewisse Amorphisierung, wenn das zweite Signal zu spät an einer erfindungsgemäß verwendbaren Vorrichtung eintrifft, um in dieser Vorrichtung einen temporären Wechsel zu einem besser leitenden Zustand zu ermöglichen. Dies kann zum Beispiel durch eine Signalform für ein zweites Signal ermöglicht werden, bei dem ein längerer Rechteckpuls mit einem geringeren Maximum (bezüglich Stromstärke und/oder Spannung) in einen kürzeren unmittelbar darauf folgenden Rechteckpuls mit einem höheren Maximum (bezüglich Stromstärke und/oder Spannung) ineinander übergehen. Der erste Rechteckpuls eines solchen Signals kann dabei zum Beispiel das in einer erfindungsgemäß verwendbaren Vorrichtung verwendete Halbleitermaterial temporär zumindest teilweise von einem angeregten amorphen schlechter leitenden Zustand in einen besser leitenden Zustand bringen, wenn das zweite Signal noch innerhalb eines bestimmten Zeitintervalls an der erfindungsgemäß verwendbaren Vorrichtung eintrifft. Das gesamte entsprechende Signal und/oder der erste Teil/Rechteckpuls eines solchen Signals kann dann in einem zum Beispiel ein mit der erfindungsgemäß verwendbaren Vorrichtung verbundenes memristives Element, dessen Zugang durch die Vorrichtung gesteuert wird, oder ein in der erfindungsgemäß verwendbaren Vorrichtung verwendetes Phasenwechselmaterial gegebenenfalls anhaltend zumindest teilweise in einen besser leitenden kristallinen oder teilkristallinen Zustand bringen.

Dies kann somit insbesondere zum Beispiel der Fall sein, wenn der erste Teil/Rechteckpuls eines solchen Signals noch innerhalb eines bestimmten Zeitintervalls an einer erfindungsgemäß verwendbaren Vorrichtung eintrifft, sodass das in einer erfindungsgemäß verwendbaren Vorrichtung verwendete Halbleitermaterial dadurch noch temporär zumindest teilweise von einem angeregten amorphen schlechter leitenden Zustand in einen besser leitenden Zustand werden kann. Andernfalls (wenn das zweite Signal oder ein Teil davon später eintrifft) kann gegebenenfalls nur noch der zweite Teil/Rechteckpuls des zweiten Signals ein in einer erfindungsgemäß verwendbaren Vorrichtung vorgesehenes durch ein erstes Signal bereits angeregtes Material temporär von einen schlechter leitenden in einen besser leitenden Zustand bringen. Dadurch kann gegebenenfalls nur noch der zweite Teil/Rechteckpuls des zweiten Signals zum anregbaren Material beziehungsweise zu einem mit der erfindungsgemäß verwendbaren Vorrichtung verbundenen memristiven Element gelangen, dessen Zugang durch die Vorrichtung gesteuert wird. Dieser zweite Teil/Rechteckpuls eines solchen Signals kann dann zum Beispiel ein mit der erfindungsgemäß verwendbaren Vorrichtung verbunden memristives Element, dessen Zugang durch die Vorrichtung gesteuert wird, oder ein in der erfindungsgemäß verwendbaren Vorrichtung verwendetes Phasenwechselmaterial, insbesondere zum Beispiel durch eine gewisse Amorphisierung, anhaltend zumindest teilweise in einen schlechter leitenden amorphen oder teilkristallinen Zustand bringen.

Ein Phasenwechselmaterial kann durch eine elektrische Anregung in Form des Anlegens einer Spannung zumindest teilweise anhaltend von einem amorphen in einen besser leitenden teilkristallinen oder einen besser leitenden kristallinen Zustand gebracht werden. Dazu kann zum Beispiel ein relativ kurzes Signal mit einer hohen Spannung oder einer hohen Stromstärke oder ein längeres Signal mit einer niedrigeren Spannung oder einer niedrigeren Stromstärke verwendet werden. Im ersteren Fall kann das Material dadurch zumindest teilweise erwärmt und schnell wieder abgekühlt werden, um eine Amorphisierung oder Teilamorphisierung zu erreichen. Im letzteren Fall kann das Material dadurch zumindest teilweise langsam erwärmt und langsam wieder abgekühlt werden, um eine Kristallisierung oder Teilkristallisierung zu erreichen.

Dadurch kann das vorgenannte Halbleitermaterial gegebenenfalls zum Beispiel zumindest teilweise anhaltend in einen Zustand gebracht werden, der insbesondere zum Beispiel im Vergleich zu einem ersten/vorherigen Zustand einen höheren elektrischen Widerstand aufweisen kann. Dies kann durch ein Signal beziehungsweise durch ein erfindungsgemäßes erstes Signal erfolgen, das zum Beispiel Resetpuls genannt werden kann. Dies kann zum Beispiel als Initialisierung einer erfindungsgemäß verwendbaren Vorrichtung gesehen werden. Ein amorpherer Zustand weist dabei einen höheren Widerstand auf. Ein Zustand mit einem höheren oder niedrigeren Widerstand kann dabei zumindest ein Teil eines entsprechenden Materials und insbesondere mindestens einen unmittelbar ein einer Elektrode (die zum Anlegen einer Anregung beziehungsweise eines Signals an einer erfindungsgemäß verwendbaren Vorrichtung verwendet werden kann) angrenzenden Teil dieses Materials betreffen.

In einer Ausführungsform kann ein Teil eines erfindungsgemäßen ersten und/oder ein Teil eines erfindungsgemäßen zweiten Signals, der/die über/durch eine erfindungsgemäß verwendbare Vorrichtung zum memristiven Element gelangt, zu einer Reduzierung des Widerstands eines memristiven Elements führen, zum Beispiel durch eine gewisse Kristallisierung, insbesondere wenn das zweite Signal innerhalb eines bestimmten Zeitintervalls nach dem ersten Signal an einer erfindungsgemäß verwendbaren Vorrichtung eintrifft. Dazu müssen die Signale/Pulse in geeigneter Weise insbesondere zum Beispiel in Abhängigkeit des für die erfindungsgemäß verwendbare Vorrichtung verwendeten anregbaren Materials, des für das memristive Element verwendeten Materials und/oder der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung gewählt beziehungsweise eingestellt werden.

In einer Ausführungsform kann ein Teil eines erfindungsgemäßen ersten und/oder ein Teil eines erfindungsgemäßen zweiten Signals, der/die über/durch eine erfindungsgemäß verwendbare Vorrichtung zum memristiven Element gelangt, zu einer Erhöhung des Widerstands eines memristiven Elements führen, zum Beispiel durch eine gewisse Armorphisierung, insbesondere wenn das zweite Signal nicht innerhalb eines bestimmten Zeitintervalls nach dem ersten Signal an einer erfindungsgemäß verwendbaren Vorrichtung eintrifft. Auch dazu müssen die Signale/Pulse in geeigneter Weise insbesondere zum Beispiel in Abhängigkeit des für die erfindungsgemäß verwendbare Vorrichtung verwendeten anregbaren Materials, des für das memristive Element verwendeten Materials und/oder der Temperatur und/oder der Verbindung/Anordnung/Einbindung einer erfindungsgemäß verwendbaren Vorrichtung und/oder eines damit verbundene memristiven Elements zum Beispiel in einem künstlichen neuronalen Netzwerk und/oder einer anderen Schaltung gewählt beziehungsweise eingestellt werden.

Je größer das Zeitintervall zwischen zwei Signalen, desto höher gegebenenfalls der Spannungsschwellenwert, der erreicht werden muss, und desto geringer der Strom und/oder die Ladung, die zum Verändern des Gewichts einer künstlichen Synapse durch eine Erhöhung oder Reduzierung des Widerstands eines memristiven Elements zur Verfügung stehen kann, um zum Beispiel eine durch die künstliche Synapse hergestellte Verbindung respektive zu verschlechtern oder zu verbessern. Mit zwei Signale(n) sind dabei erfindungsgemäß zum Beispiel ein erstes/früheres und ein zweites Signal gemeint.

Dabei kann gegebenenfalls bei der Verschaltung einer erfindungsgemäß verwendbaren Vorrichtung und eines damit verbundenen memristiven Elements, dessen Zugang dadurch gesteuert wird, ermöglicht werden, dass zumindest ein Teil jeder Anregung beziehungsweise jedes Signals, die/das an einer erfindungsgemäß verwendbaren Vorrichtung ankommt beziehungsweise angelegt wird, sowohl zu einer erfindungsgemäß verwendbaren Vorrichtung als auch zu dem damit verbundenen memristiven Element, dessen Zugang dadurch gesteuert wird, gelangen.

Dabei kann gegebenenfalls bei der Verschaltung einer erfindungsgemäß verwendbaren Vorrichtung und eines damit verbundenen memristiven Elements, dessen Zugang dadurch gesteuert wird, zum Beispiel durch Vorsehen eines Widerstands dafür gesorgt werden, dass das erste/frühere Signal möglichst wenig Einfluss auf das memristive Element hat und darin möglichst nicht zu einer Veränderung, insbesondere eine anhaltende Veränderung, führt. Dazu kann auch das verwendete anregbare Material und/oder das verwendete Phasenwechselmaterial und/oder das verwendete memristive Element und/oder die Temperatur und/oder das erste Signal und/oder die Verbindung/Anordnung/Einbindung einer erfindungsgemäß verwendbaren Vorrichtung und/oder eines damit verbundene memristiven Elements zum Beispiel in einem künstlichen neuronalen Netzwerk und/oder einer anderen Schaltung in geeigneter Weise gewählt beziehungsweise eingestellt werden.

Dadurch kann eine erfindungsgemäß verwendbare Vorrichtung, die mit einem memristiven Element verbunden ist, um den Zugang dazu zu steuern, zum Beispiel als künstliche Synapse verwendet werden, bei der das Gewicht durch eine Veränderung des Widerstands eines memristiven Elements, welches mit einer erfindungsgemäß verwendbaren Vorrichtung verbunden ist, bequem beeinflusst werden kann.

Alternativ zum Vorsehen eines memristiven Elements kann ein Phasenwechselmaterial, welches in einer erfindungsgemäß verwendbaren Vorrichtung als anregbares Material verwendet wird, oder ein Materials, bei dem ein Phasenwechsel erfolgen kann, welches in einer erfindungsgemäß verwendbaren Vorrichtung als anregbares Material verwendet wird, gegebenenfalls auch dazu verwendet werden, das Gewicht einer als künstliche Synapse beziehungsweise in/mit einer künstlichen Synapse verwendeten erfindungsgemäß verwendbaren Vorrichtung ohne ein damit verbundenes und ansonsten eigenständiges memristives Element zu verändern. Dies kann in einem solchen Fall gegebenenfalls durch eine anhaltende Veränderung des elektrischen Widerstands des in einer erfindungsgemäß verwendbaren Vorrichtung verwendeten Phasenwechselmaterials zum Beispiel durch ein erfindungsgemäßes erstes/früheres Signal und/oder ein erfindungsgemäßes zweites Signal erfolgen.

Dazu kann zum Beispiel mit dem ersten Signal nur ein kleiner und unmittelbar an einer Elektrode angrenzender Teil des verwendeten Phasenwechselmaterials oder des verwendeten Materials, bei dem ein Phasenwechsel erfolgen kann, verändert werden und mit einem zweiten Signal ein Teil des verwendeten Phasenwechselmaterials oder des verwendeten Materials, bei dem ein Phasenwechsel erfolgen kann, verändert werden, der nicht mehr unmittelbar an der Elektrode angrenzt. Die Elektrode kann dabei insbesondere zum Beispiel eine Elektrode sein, die zum Anlegen einer Anregung beziehungsweise eines Signals an einer erfindungsgemäß verwendbaren Vorrichtung verwendet werden kann.

Dadurch kann das Gewicht einer erfindungsgemäß verwendbaren Vorrichtung, welche insbesondere zum Beispiel als künstliche Synapse beziehungsweise in/mit einer künstlichen Synapse verwendet werden kann, auch ohne ein damit verbundenes und ansonsten eigenständiges memristives Element verändert werden und in Abhängigkeit des Zeitintervalls zwischen zwei Signalen bequem beeinflusst werden, um ein STDP-Verhalten zu realisieren.

In einer Ausführungsform einer erfindungsgemäß verwendbaren Vorrichtung kann eine erfindungsgemäß verwendbare Vorrichtung mindestens ein Heizelement und/oder Kühlelement umfassen. Dadurch kann die Veränderung der Anregbarkeit des verwendeten anregbaren Materials in Abhängigkeit der Temperatur eingestellt beziehungsweise beschleunigt oder verlangsamt werden. Bei einer höheren Temperatur kann die Veränderung dabei zum Beispiel beschleunigt werden. Im Gegensatz dazu kann die Veränderung der Anregbarkeit bei einer geringeren Temperatur verlangsamt werden. Die Temperatur kann dabei zum Beispiel jeweils für jede einzelne erfindungsgemäß verwendbare Vorrichtung, für eine und/oder mehrere Gruppen von mindestens zwei oder mehr erfindungsgemäß verwendbaren Vorrichtungen und/oder für alle erfindungsgemäß verwendbaren Vorrichtungen gemeinsam verändert werden. Dadurch kann ein Wechsel des anregbaren Materials beziehungsweise des anregbaren Halbleitermaterials im angeregten beziehungsweise amorphen oder teilkristallinen Zustand von einem schlechter leitenden Zustand zu einem besser leitenden Zustand durch ein erfindungsgemäßes zweites Signal bei einer erhöhten Temperatur erschwert werden, da die Veränderung der Anregbarkeit unter diesen Bedingungen beschleunigt werden kann und das Zeitintervall, in dem die Voraussetzung für einen Wechsel des Halbleitermaterials im amorphen Zustand von einem schlechter leitenden Zustand zu einem besser leitenden Zustand durch ein erfindungsgemäßes zweites Signal noch erfüllt wird, somit reduziert wird. Andererseits kann das entsprechende Zeitintervall bei einer reduzierten Temperatur gegebenenfalls verlängert werden.

Gegebenenfalls kann eine erfindungsgemäß verwendbare Vorrichtung dabei auch ohne separates/eigenständiges Heizelement zum Beispiel durch Anlegen eines elektrischen Stroms erwärmt werden, wobei die elektrische Spannung den Spannungsschwellenwert des verwendeten amorphen Halbleitermaterials nicht erreicht.

Durch eine erhöhte Temperatur kann das Zeitintervall, in dem die Voraussetzung für einen Wechsel des Halbleitermaterials im amorphen Zustand von einem schlechter leitenden Zustand zu einem besser leitenden Zustand durch ein erfindungsgemäßes zweites Signal noch erfüllt wird, für eine erfindungsgemäß verwendbare Vorrichtung in einem Lernmodus gegebenenfalls verändert werden. Dadurch kann zum Beispiel die Lernfähigkeit einer künstlichen Synapse verändert werden und/oder eine erfindungsgemäß verwendbare Vorrichtung gegebenenfalls sogar in einen Verarbeitungsmodus gebracht werden, bei dem das vorgenannte Zeitintervall erheblich verkürzt wird. In einem Verarbeitungsmodus soll dabei ein Wechsel des Halbleitermaterials im amorphen Zustand von einem schlechter leitenden Zustand zu einem besser leitenden Zustand durch ein erfindungsgemäßes zweites Signal gegebenenfalls sogar möglichst verhindert werden, um eine Verarbeitung von Daten zu ermöglichen, bei welcher der Widerstand einer künstlichen Synapse möglichst nicht mehr verändert werden soll.

Dadurch kann eine Veränderung des Widerstands einer künstlichen Synapse bei Bedarf im Verarbeitungsmodus erschwert (wenn überhaupt, nur für ein sehr kurzes Zeitintervall zwischen zwei Signalen möglich) und/oder vollkommen verhindert werden.

In einer Ausführungsform einer erfindungsgemäß verwendbaren Vorrichtung kann eine solche erfindungsgemäß verwendbare Vorrichtung zum Beispiel auch mindestens einen Anregungsgenerator beziehungsweise Signalgenerator umfassen. Alternativ dazu kann ein Anregungsgenerator beziehungsweise Signalgenerator zum Beispiel auch für eine Gruppe von zwei oder mehr erfindungsgemäß verwendbaren Vorrichtungen und/oder für alle erfindungsgemäß verwendbaren Vorrichtungen vorgesehen sein. Ein Anregungsgenerator kann dabei gegebenenfalls derart ausgestaltet sein, dass er es zum Beispiel erlaubt, Parameter wie die Dauer und/oder die Intensität einer Anregung zu wählen beziehungsweise zu beeinflussen. Ein Signalgenerator kann gegebenenfalls zum Beispiel derart ausgestaltet sein, dass zum Beispiel die durch das Signal angelegte Spannung und/oder die entsprechend angelegte Stromstärke und/oder die Dauer des Anlegens der Spannung und/oder der Stromstärke und/oder die Form des Spannungssignals und/oder des Stromstärkesignals geregelt/gewählt/verändert werden kann. Der Signalgenerator kann dabei insbesondere zum Beispiel dafür sorgen, dass die durch das erfindungsgemäße zweite Signal angelegte Spannung und/oder die entsprechend angelegte Stromstärke und/oder die Dauer des Anlegens der Spannung und/oder der Stromstärke und/oder die Form des Spannungssignals und/oder des Stromstärkesignals in Abhängigkeit der Eigenschaften des erfindungsgemäß verwendeten Halbleitermaterials und/oder der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung gegebenenfalls so gewählt beziehungsweise eingestellt werden kann, dass die Vorrausetzung für einen Wechsel des angeregten Materials beziehungsweise des amorphen Halbleitermaterials von einem schlechter leitenden Zustand zu einem besser leitenden Zustand zum Beispiel nur innerhalb eines Zeitintervalls < 0,1 s, bevorzugt < 0,05 s, bevorzugt < 0,025 s, bevorzugt < 0,01 s, bevorzugt < 0,005 s, bevorzugt < 0,001 s, bevorzugt < 775 µs, weiter bevorzugt < 500 µs, weiter bevorzugt < 250 µs, weiter bevorzugt < 200 µs, weiter bevorzugt < 150 µs, weiter bevorzugt < 100 µs, weiter bevorzugt < 50 µs, weiter bevorzugt < 20 µs, weiter bevorzugt < 10 µs, weiter bevorzugt < 5 µs, weiter bevorzugt < 1 µs, weiter bevorzugt < 0,5 µs, weiter bevorzugt < 500 ns, weiter bevorzugt < 100 ns, weiter bevorzugt< 50 ns, besonders bevorzugt< 10 ns, erfüllt wird. Die Eigenschaften des verwendeten anregbaren Halbleitermaterials umfassen dabei zum Beispiel insbesondere die Anregbarkeit beziehungsweise den Spannungsschwellenwert und/oder die Veränderung der Anregbarkeit mit der Zeit beziehungsweise den Drift des Spannungsschwellenwerts mit der Zeit. Ein geringeres Zeitintervall kann dabei gegebenenfalls zum Beispiel in einem Verarbeitungsmodus sinnvoll sein und/oder zu einer höheren Verarbeitungsgeschwindigkeit beziehungsweise einem höheren Datendurchsatz beitragen.

Der Signalgenerator kann dabei zum Beispiel dafür sorgen, dass die durch ein erstes erfindungsgemäßes Signal und/oder durch ein zweites erfindungsgemäßes Signal angelegte Spannung und/oder die entsprechend angelegte Stromstärke und/oder die entsprechende Dauer des Anlegens der Spannung und/oder der Stromstärke und/oder die entsprechende Form des Spannungssignals und/oder des Stromstärkesignals in Abhängigkeit der Eigenschaften des erfindungsgemäß verwendeten anregbaren Halbleitermaterials und/oder der Temperatur und/oder der Verbindung/Anordnung/Einbindung einer erfindungsgemäß verwendbaren Vorrichtung und/oder eines damit verbundene memristiven Elements zum Beispiel in einem künstlichen neuronalen Netzwerk und/oder einer anderen Schaltung geeignet gewählt beziehungsweise eingestellt werden, da die Wahl der vorgenannten Parameter insbesondere zum Beispiel von der Anregbarkeit beziehungsweise der elektrischen Anregbarkeit und/oder der Veränderung dieser Anregbarkeit beziehungsweise dieser elektrischen Anregbarkeit mit der Zeit abhängen kann. In der Tat kann das Zeitintervall, in dem die Voraussetzung für einen Wechsel des anregbaren Materials oder anregbaren Halbleitermaterials im angeregten beziehungsweise im amorphen Zustand von einem schlechter leitenden Zustand zu einem besser leitenden Zustand durch ein erfindungsgemäßes zweites Signal noch erfüllt wird, zum Beispiel vom verwendeten anregbaren Halbleitermaterial und/oder von der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung abhängen. Insbesondere kann die Wahl der vorgenannten Parameter dabei zum Beispiel vom Spannungsschwellenwert eines amorphen Halbleitermaterials und/oder von der Veränderung des Spannungsschwellenwerts mit der Zeit abhängen. Der Spannungsschwellenwert eines amorphen Halbleitermaterials kann dabei als Schwellenwert für die Anregbarkeit beziehungsweise elektrische Anregbarkeit gesehen werden. Die insbesondere durch das zweite Signal angelegte Spannung und/oder die entsprechend angelegte Stromstärke und/oder die Dauer des Anlegens der Spannung und/oder der Stromstärke und/oder die Form des Spannungssignals und/oder des Stromstärkesignals kann dabei in Abhängigkeit der Eigenschaften des erfindungsgemäß verwendeten anregbaren Halbleitermaterials und/oder der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung gegebenenfalls einmal zum Beispiel durch einen Signalgenerator eingestellt/gewählt werden.

Ferner kann der Signalgenerator zum Beispiel dafür sorgen, dass die durch ein erstes erfindungsgemäßes Signal und/oder durch ein zweites erfindungsgemäßes Signal angelegte Spannung und/oder die entsprechend angelegte Stromstärke und/oder die entsprechende Dauer des Anlegens der Spannung und/oder der Stromstärke und/oder die entsprechende Form des Spannungssignals und/oder des Stromstärkesignals in Abhängigkeit der Eigenschaften des erfindungsgemäß verwendeten anregbaren Halbleitermaterials und/oder der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung geeignet gewählt beziehungsweise eingestellt werden, um insbesondere zum Beispiel mit dem zweiten Signal oder zumindest mit einem Teil davon eine Veränderung des Widerstands eines mit einer erfindungsgemäß verwendbaren Vorrichtung verbundenen memristiven Elements und/oder eine Veränderung des Widerstands eines in einer erfindungsgemäß verwendbaren Vorrichtung verwendeten Phasenwechselmaterials erreichen zu können.

Dadurch kann eine erfindungsgemäß verwendbare Vorrichtung, welche ein damit verbundenes memristives Element umfasst, wobei der Zugang dazu von der Vorrichtung gesteuert wird, zum Beispiel als künstliche Synapse verwendet werden, bei der das Gewicht durch eine Veränderung des Widerstands eines memristiven Elements, welches mit einer erfindungsgemäß verwendbaren Vorrichtung verbunden ist, in Abhängigkeit des Zeitintervalls zwischen zwei Signalen bequem beeinflusst werden kann, um ein STDP-Verhalten zu realisieren.

Die vorliegende Erfindung betrifft ferner die erfindungsgemäßen Verwendung mindestens einer Vorrichtung, wobei mindestens eine erfindungsgemäß verwendbare Vorrichtung zum Beispiel in einem künstlichen neuronalen Netzwerk insbesondere zum Beispiel in einer künstlichen Synapse und/oder als Teil einer künstlichen Synapse und/oder als künstliche Synapse vorgesehen ist beziehungsweise verwendet wird. Dabei kann mindestens eine erfindungsgemäß verwendbare Vorrichtung auch dazu verwendet werden, die zeitliche Korrelation zwischen zwei daran ankommenden/angelegten Signalen auszuwerten, um ein STDP-Verhalten zu realisieren beziehungsweise das Gewicht von einer künstlichen Synapse oder mehreren künstlichen Synapsen zum Beispiel in einem künstlichen neuronalen Netzwerk und/oder in einer Schaltung in Abhängigkeit des Zeitintervalls zwischen zwei Signalen zu verändern. Eine künstliche Synapse kann zum Beispiel eine Verbindung zwischen zwei Punkten beziehungsweise zwei künstlichen Neuronen darstellen/ermöglichen, insbesondere in einem künstlichen neuronalen Netzwerk. Ein künstliches neuronales Netzwerk kann dabei zum Beispiel aus neuromorpher Hardware bestehen oder entsprechende Hardware umfassen und nach dem Vorbild eines natürlichen Neuronennetzwerks aufgebaut sein beziehungsweise ein solches nachbilden.

Dadurch kann ein STDP-Verhalten bequem realisiert werden. Ein STDP-Verhalten kann somit vorteilhafterweise insbesondere zum Beispiel auch ohne aufwendige zusätzliche Elektronik zum Timen der Signale/Pulse realisiert werden.

Die vorliegende Erfindung betrifft ferner die erfindungsgemäßen Verwendung mindestens einer Vorrichtung, wobei mindestens eine erfindungsgemäß verwendbare Vorrichtung zum Beispiel dazu verwendet wird, den elektrischen Widerstand an bestimmten Punkten eines neuronalen Netzwerks insbesondere zum Beispiel als künstliche Synapse in Abhängigkeit des Zeitintervalls zwischen zwei an der Vorrichtung angelegten/ankommenden Signalen zu verändern, wobei eine Veränderung des Widerstands durch eine Veränderung des Widerstands eines memristiven Elements erfolgt, welches mit der erfindungsgemäß verwendbaren Vorrichtung verbunden ist, die den Zugang dazu steuert.

Dadurch kann das Erhöhen oder Reduzieren des Widerstands an bestimmten Punkten eines neuronalen Netzwerks und/oder als künstliche Synapse dazu führen, dass die Verbindung zwischen bestimmten Punkten eines neuronalen Netzwerks und/oder zwischen bestimmten künstlichen Neuronen durch eine elektrische Veränderung des Widerstands des memristiven Elements verbessert oder verschlechtert wird.

Eine erfindungsgemäß verwendbare Vorrichtung, welche ein memristives Element umfasst und den Zugang dazu steuert, kann daher zum Beispiel als künstliche Synapse in einem künstlichen neuronalen Netzwerk verwendet werden, wobei das Gewicht einer künstlichen Synapse durch Veränderung des Widerstands des memristiven Elements verändert werden kann.

Das Gewicht einer Synapse kann dabei erhöht werden, wenn die Verbindung, die durch diese Synapse hergestellt wird, durch Zugang über eine erfindungsgemäß verwendbare Vorrichtung durch Reduzierung des Widerstands eines memristiven Elements verbessert wird. Andererseits kann das Gewicht einer Synapse verringert werden, wenn die Verbindung, die durch diese Synapse hergestellt wird, durch Zugang über eine erfindungsgemäß verwendbare Vorrichtung, die den Zugang steuert, durch Erhöhung des Widerstands eines memristiven Elements verschlechtert wird.

Der Widerstand eines memristiven Elements, welches mit einer erfindungsgemäß verwendbaren Vorrichtung verbunden ist und dessen Zugang dadurch gesteuert wird, kann insbesondere zum Beispiel reduziert werden, wenn die Voraussetzung für einen Wechsel eines anregbaren Halbleitermaterials im angeregten amorphen Zustand von einem schlechter leitenden Zustand zu einem besser leitenden Zustand beim Eintreffen eines erfindungsgemäßen zweiten Signals an einer erfindungsgemäß verwendbaren Vorrichtung noch erfüllt wird beziehungsweise wenn ein erfindungsgemäßes zweites Signal innerhalb eines Zeitintervalls an der erfindungsgemäß verwendbaren Vorrichtung eintrifft, in dem die Voraussetzung für einen Wechsel des angeregten amorphen Halbleitermaterials, welches in einer erfindungsgemäß verwendbaren Vorrichtung verwendet wird, zu einem Zustand mit einem geringeren Widerstand trotz der Veränderung der Anregbarkeit dieses Materials mit der Zeit bei Eintreffen des zweiten Signals noch erfüllt wird.

Andererseits kann der Widerstand eines memristiven Elements, welches mit einer erfindungsgemäß verwendbaren Vorrichtung verbunden ist und dessen Zugang dadurch gesteuert wird auch erhöht werden, wenn die vorgenannte Voraussetzung für einen Wechsel des angeregten amorphen Halbleitermaterials nicht mehr erfüllt wird.

Dadurch kann eine erfindungsgemäß verwendbare Vorrichtung, welche ein damit verbundenes memristives Element umfasst, wobei Zugang dazu von der erfindungsgemäß verwendbaren Vorrichtung gesteuert wird, zum Beispiel als künstliche Synapse verwendet werden, bei der das Gewicht durch eine Veränderung des Widerstands eines memristiven Elements, welches mit einer erfindungsgemäß verwendbaren Vorrichtung verbunden ist, in Abhängigkeit des Zeitintervalls zwischen zwei Signalen bequem beeinflusst werden kann, um ein STDP-Verhalten zu realisieren.

Alternativ kann mindestens eine erfindungsgemäß verwendbare Vorrichtung zum Beispiel dazu verwendet werden, den elektrischen Widerstand an bestimmten Punkten eines neuronalen Netzwerks insbesondere zum Beispiel als künstliche Synapse in Abhängigkeit des Zeitintervalls zwischen zwei an der Vorrichtung angelegten/ankommenden Signalen zu verändern, wobei eine Veränderung des Widerstands durch eine Veränderung des Widerstands des in einer erfindungsgemäß verwendbaren Vorrichtung verwendeten anregbaren Phasenwechselmaterials erfolgt.

Dabei kann der Widerstand einer erfindungsgemäß verwendbaren Vorrichtung reduziert werden, wenn die Voraussetzung für einen Wechsel des darin verwendeten anregbaren Phasenwechselmaterials von einem schlechter leitenden Zustand zu einem besser leitenden Zustand beim Eintreffen eines erfindungsgemäßen zweiten Signals an einer erfindungsgemäß verwendbaren Vorrichtung noch erfüllt wird beziehungsweise wenn ein erfindungsgemäßes zweites Signal innerhalb eines Zeitintervalls an der Vorrichtung eintrifft, in dem die Voraussetzung für einen Wechsel trotz der Veränderung der Anregbarkeit dieses Materials mit der Zeit noch erfüllt wird.

Andererseits kann der Widerstand einer erfindungsgemäß verwendbaren Vorrichtung unverändert hoch bleiben und/oder erhöht werden, wenn die Voraussetzung für einen Wechsel des anregbaren Phasenwechselmaterials von einem schlechter leitenden Zustand zu einem besser leitenden Zustand beim Eintreffen eines erfindungsgemäßen zweiten Signals an einer erfindungsgemäß verwendbaren Vorrichtung nicht mehr erfüllt wird beziehungsweise wenn ein erfindungsgemäßes zweites Signal nach Ablauf des Zeitintervalls, in dem die Voraussetzung für einen Wechsel trotz der Veränderung der Anregbarkeit dieses Materials mit der Zeit noch erfüllt wird, an der Vorrichtung eintrifft.

Eine erfindungsgemäß verwendbare Vorrichtung kann demnach als künstliche Synapse in einem künstlichen neuronalen Netzwerk verwendet werden, insbesondere auch wenn die erfindungsgemäß verwendbare Vorrichtung nicht mit einem eigenständigen memristiven Element verbunden ist. Dass der elektrische Widerstand an bestimmten Punkten eines künstlichen neuronalen Netzwerks dabei in Abhängigkeit des Zeitintervalls zwischen zwei an der Vorrichtung angelegten/ankommenden Signalen verändert wird, kann dazu führen, dass das Gewicht der künstlichen Synapse verändert wird beziehungsweise dass die Verbindung, die durch die Synapse hergestellt wird, verbessert wird, unverändert bleibt und/oder verschlechtert wird.

Dadurch kann eine erfindungsgemäß verwendbare Vorrichtung zum Beispiel als künstliche Synapse verwendet werden, bei der das Gewicht durch eine Veränderung des Widerstands eines memristiven Elements, welches mit einer erfindungsgemäß verwendbaren Vorrichtung verbunden ist, in Abhängigkeit des Zeitintervalls zwischen zwei Signalen bequem beeinflusst werden kann, um ein STDP-Verhalten zu realisieren.

Die vorliegende Erfindung betrifft ebenfalls ein Verfahren zur Auswertung eines Zeitintervalls zwischen zwei Anregungen, bei dem
- eine erste Anregung an ein anregbares Halbleitermaterial angelegt wird, um dieses Material in einen angeregten amorphen Zustand zu versetzen,
- die Anregbarkeit des anregbaren Halbleitermaterials im angeregten Zustand sich mit der Zeit verändert,
- eine zweite Anregung an das anregbare Material im angeregten Zustand angelegt wird,
- ein temporärer Wechsel von einem elektrisch schlechter leitenden zu einem elektrisch besser leitenden Zustand in Abhängigkeit der Veränderung der Anregbarkeit des anregbaren Materials im angeregten Zustand durch die zweite Anregung ausgelöst werden kann.

Die vorliegende Erfindung betrifft insbesondere ein Verfahren zur Auswertung eines Zeitintervalls zwischen zwei Signalen, bei dem
- ein erstes elektrisches Signal an einem elektrisch anregbaren Halbleitermaterial angelegt wird, um dieses Halbleitermaterial in einen amorphen Zustand zu versetzen,
- die elektrische Anregbarkeit des Halbleitermaterials im amorphen Zustand sich mit der Zeit verändert,
- ein zweites elektrisches Signal an das Halbleitermaterial im amorphen Zustand angelegt wird,
- ein temporärer Wechsel von einem elektrisch schlechter leitenden zu einem elektrisch besser leitenden Zustand in Abhängigkeit der Veränderung der Anregbarkeit des Halbleitermaterials im amorphen Zustand durch das zweite elektrische Signal ausgelöst werden kann.

Mit Veränderung der Anregbarkeit kann dabei zum Beispiel die Veränderung der weiteren Anregbarkeit nach einer ersten Anregung, insbesondere durch ein erstes/ Signal, gemeint sein. Die Anregbarkeit des angeregten amorphen Halbleitermaterials kann sich dabei mit der Zeit beziehungsweise mit fortschreitender Zeit verändern.

Temporär kann nicht anhaltend bedeuten, so dass ein temporärer Wechsel und/oder ein temporärer Zustand zum Beispiel nur bei anhaltender Anregung beziehungsweise für die Dauer einer Anregung, insbesondere bei anhaltendem Signal beziehungsweise für die Dauer eines Signals vorhalten kann/erreicht werden kann. Ein temporärer Wechsel beziehungsweise ein temporärer Zustand kann dabei zum Beispiel insbesondere zumindest einen Teil eines entsprechenden Materials betreffen.

Die erste Anregung beziehungsweise das erfindungsgemäße erste Signal und die zweite Anregung beziehungsweise das erfindungsgemäße zweite Signal können in einem künstlichen neuronalen Netzwerk bevorzugt zum Beispiel aus zwei verschiedenen Quellen stammen, nämlich aus zwei verschiedenen künstlichen Neuronen eines künstlichen neuronalen Netzwerks beziehungsweise des künstlichen Neuronennetzwerks (dem präsynaptischen Neuron und/oder dem postsynaptischen Neuron). Diese zwei verschiedenen künstlichen Neuronen können an einer erfindungsgemäß verwendbaren Vorrichtung, welche zum Beispiel als künstliche Synapse und/oder als Teil einer künstlichen Synapse in einem künstlichen neuronalen Netzwerk verwendet werden kann, zusammentreffen beziehungsweise durch eine erfindungsgemäß verwendbare Vorrichtung verbunden werden. Die beiden voneinander verschiedenen künstlichen Neuronen (präsynaptisches Neuron und postsynaptisches Neuron) werden daher über eine erfindungsgemäß verwendbare Vorrichtung, die als künstliche Synapse und/oder als Teil einer künstlichen Synapse verwendet wird, miteinander verbunden.

Die erste Anregung beziehungsweise das erfindungsgemäße erste Signal kann dabei zum Beispiel durch ein präsynaptisches künstliches Neuron erzeugt und/oder ausgesendet werden, welches mit einer als künstliche Synapse verwendeten erfindungsgemäß verwendbaren Vorrichtung verbunden ist. Die zweite Anregung beziehungsweise das erfindungsgemäße zweite Signal kann dabei zum Beispiel durch ein postsynaptisches künstliches Neuron erzeugt und/oder ausgesendet werden, welches ebenfalls mit der gleichen als künstliche Synapse verwendeten erfindungsgemäß verwendbaren Vorrichtung verbunden ist. Gegebenenfalls kann die erste Anregung beziehungsweise das erste Signal alternativ auch von einem künstlichen postsynaptischen Neuron erzeugt und/oder ausgesendet werden. In diesem Fall kann die zweite Anregung beziehungsweise das zweite Signal vom entsprechenden künstlichen präsynaptischen Neuron erzeugt und/oder ausgesendet werden.

In einer Ausführungsform eines erfindungsgemäßen Verfahrens kann der Widerstand eines memristiven Elements, welches mit einer erfindungsgemäß verwendbaren Vorrichtung so verbunden ist, dass diese den Zugang zum memristiven Elements steuert, durch mindestens einen Teil einer ersten Anregung beziehungsweise eines ersten Signals und/oder einen Teil einer zweiten Anregung beziehungsweise eines zweiten Signals erhöht oder reduziert werden.

Dadurch kann eine Verbindung, die durch eine erfindungsgemäß verwendbare Vorrichtung, welche mit einem memristiven Element verbunden ist und den Zugang dazu steuert, verbessert oder verschlechtert werden, um eine Verwendung als künstliche Synapse zu ermöglichen und gegebenenfalls ein STDP-Verhalten bequem zu realisieren.

Die vorliegende Erfindung betrifft ferner zum Beispiel auch ein Verfahren zur Auswertung eines Zeitintervalls zwischen zwei Anregungen beziehungsweise zwei Signalen, bei dem zum Beispiel ein durch eine Anregung beziehungsweise ein elektrisches Signal ausgelöster temporärer Wechsel eines elektrisch anregbaren Halbleitermaterials von einem elektrisch schlechter leitenden zu einem elektrisch besser leitenden Zustand erfolgt, wenn trotz der Veränderung der Anregbarkeit die Voraussetzung für einen solchen Wechsel erfüllt sind. Ob die Voraussetzung für einen solchen Wechsel erfüllt wird, kann zum Beispiel insbesondere zum Beispiel von Zeitpunkt der Anregung beziehungsweise von Zeitpunkt des Eintreffens des Signals abhängen.

Ob die Voraussetzung für einen solchen Wechsel erfüllt wird, kann zudem jedoch zum Beispiel noch von der Temperatur und/oder vom verwendeten ersten und/oder zweiten Signal und/oder vom verwendeten anregbaren Halbleitermaterial abhängen.

Die vorliegende Erfindung betrifft ferner zum Beispiel auch ein Verfahren zur Auswertung eines Zeitintervalls zwischen zwei Anregungen beziehungsweise zwei Signalen, bei dem zum Beispiel der Widerstand eines in einer erfindungsgemäß verwendeten Vorrichtung anregbaren elektrisch anregbaren Halbleitermaterials, welches durch eine erste Anregung beziehungsweise ein erstes Signal zumindest teilweise in einen angeregten amorphen Zustand gebracht wurde, temporär reduziert werden kann wenn die Länge des Zeitintervalls nicht über einen bestimmten Wert liegt. Andererseits kann der Widerstand der erfindungsgemäß verwendbaren Vorrichtung unverändert bleiben, wenn ein Wert für die Länge des Zeitintervalls zwischen dem ersten und dem zweiten Signal überschritten wird. Dies ist hier zum Beispiel der Fall, wenn das zweite Signal zu spät nach dem ersten Signal an der erfindungsgemäß verwendbaren Vorrichtung eintrifft, um das angeregte amorphe Material noch temporär von einem schlechter leitenden Zustand in einen besser leitenden Zustand zu bringen.

Ein temporärer Wechsel des angeregten amorphen Halbleitermaterials von einem schlechter leitenden Zustand zu einem besser leitenden Zustand kann somit zum Beispiel nur innerhalb eines bestimmten Zeitintervalls erfolgen. Dadurch kann ein STDP-Verhalten bequem realisiert werden.

Die vorliegende Erfindung betrifft ebenfalls ein Verfahren zur Auswertung eines Zeitintervalls zwischen zwei Anregungen beziehungsweise zwei Signalen, bei dem der Widerstand eines memristiven Elements, welches mit einer erfindungsgemäßen Vorrichtung verbunden ist und dessen Zugang durch diese Vorrichtung gesteuert wird, anhaltend reduziert werden kann, wenn das Zeitintervall zwischen zwei Anregungen beziehungsweise zwei Signalen kurz genug ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringen kann.

Zudem kann der Widerstand eines memristiven Elements, welches mit einer erfindungsgemäß verwendbaren Vorrichtung verbunden ist und dessen Zugang durch diese Vorrichtung gesteuert wird, anhaltend erhöht werden, wenn das Zeitintervall zwischen zwei Anregungen beziehungsweise zwei Signalen zu lang ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringen kann.

Alternativ kann der Widerstand einer erfindungsgemäß verwendbaren Vorrichtung erhöht bleiben oder erhöht werden, wenn das Zeitintervall zwischen zwei Anregungen beziehungsweise zwei Signalen zu lang/groß ist, damit die zweite Anregung beziehungsweise das zweite Signal das angeregte amorphe Halbleitermaterial temporär von einem elektrisch schlechter leitenden Zustand in einen elektrisch besser leitenden Zustand bringen kann. Eine Veränderung des Widerstands eines memristiven Elements kann dabei zum Beispiel ermöglicht und/oder vereinfacht werden, wenn der Widerstand einer erfindungsgemäßen Vorrichtung erhöht wird oder erhöht bleibt. Somit kann eine Veränderung des Widerstands eines memristiven Elements zum Beispiel verhindert und/oder erschwert werden, wenn der Widerstand einer erfindungsgemäß verwendbaren Vorrichtung reduziert wird. Dies kann insbesondere sinnvoll sein, wenn eine erfindungsgemäße Vorrichtung und ein damit verbundenes memristives Element, dessen Zugang durch die Vorrichtung gesteuert wird, parallel geschaltet sind.

Dadurch kann eine Verbindung, die durch eine erfindungsgemäß verwendbare Vorrichtung, welche ein memristives Element umfasst und als künstliche Synapse verwendet wird, in Abhängigkeit des Zeitintervalls zwischen einer ersten und einer zweiten Anregung beziehungsweise einem ersten und einem zweiten Signal verbessert oder verschlechtert werden, um ein STDP-Verhalten bequem zu realisieren.

Die vorliegende Erfindung betrifft ebenfalls ein Verfahren zur Auswertung eines Zeitintervalls zwischen zwei Anregungen beziehungsweise zwei Signalen, bei dem der Widerstand eines Phasenwechselmaterials, welches in einer erfindungsgemäß verwendbaren Vorrichtung verwendet wird, anhaltend reduziert werden kann, wenn das Zeitintervall zwischen zwei Anregungen beziehungsweise zwei Signalen kurz genug ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringen kann.

Die vorliegende Erfindung betrifft ebenfalls ein Verfahren zur Auswertung eines Zeitintervalls zwischen zwei Anregungen beziehungsweise zwei Signalen, bei dem der Widerstand eines Phasenwechselmaterials, welches in einer erfindungsgemäß verwendbaren Vorrichtung verwendet wird, anhaltend erhöht werden kann, wenn das Zeitintervall zwischen zwei Anregungen beziehungsweise zwei Signalen zu lang ist, damit eine zweite Anregung beziehungsweise ein zweites Signal das angeregte amorphe Halbleitermaterial noch temporär von einem elektrisch schlechter leitenden Zustand nicht mehr in einen elektrisch besser leitenden Zustand bringen kann.

Dadurch kann das Gewicht einer erfindungsgemäß verwendbaren Vorrichtung, welche insbesondere zum Beispiel als künstliche Synapse beziehungsweise in/mit einer künstlichen Synapse verwendet kann, auch ohne ein damit verbundenes und ansonsten eigenständiges memristives Element verändert und in Abhängigkeit des Zeitintervalls zwischen zwei Signalen bequem beeinflusst werden, um ein STDP-Verhalten zu realisieren.

Die vorliegende Erfindung betrifft ein Verfahren zur Auswertung eines Zeitintervalls zwischen zwei Anregungen beziehungsweise zwei Signalen, bei das anregbare Material ein anregbares Phasenwechselmaterial ist. Durch einen somit ermöglichten schnellen Wechsel zwischen Materialzuständen können die Signale, die verarbeitet werden müssen, zum Beispiel zeitlich kürzer aufeinander folgen. Daher kann gegebenenfalls eine hohe Verarbeitungsgeschwindigkeit beziehungsweise ein hoher Datendurchsatz erreicht werden.

Die vorliegende Erfindung betrifft ebenfalls ein Verfahren zur Auswertung eines Zeitintervalls zwischen zwei Anregungen beziehungsweise zwei Signalen, bei dem ein Anregungsgenerator beziehungsweise ein Signalgenerator eine Anregung beziehungsweise ein Signal in geeigneter Weise auswählen beziehungsweise einstellen kann.

Die zweite Anregung beziehungsweise das zweite Signal kann dabei so gewählt beziehungsweise eingestellt werden, dass ein temporärer Wechsel elektrisch anregbaren Halbleitermaterials von einem elektrisch schlechter leitenden zu einem elektrisch besser leitenden Zustand nur erfolgt, wenn ein Wert für das Zeitintervall zwischen der ersten und zweiten Anregung beziehungsweise dem erstens und dem zweiten Signal nicht überschritten wird.

Dass die zweite Anregung beziehungsweise das zweite Signal so gewählt wird, dass ein temporärer Wechsel eines anregbaren Halbleitermaterials von einem elektrisch schlechter leitenden zu einem elektrisch besser leitenden Zustand nur erfolgt, wenn ein Wert für das Zeitintervall zwischen dem ersten und dem zweiten Signal nicht überschritten wird, kann dabei zum Beispiel bedeuten, dass die durch die zweite Anregung beziehungsweise das zweite Signal angelegte Spannung und/oder die entsprechend angelegte Stromstärke und/oder die Dauer des Anlegens der Spannung und/oder der Stromstärke und/oder die Form des Spannungssignals und/oder des Stromstärkesignals der zweiten Anregung beziehungsweise des zweiten Signals in Abhängigkeit von der Anregbarkeit des verwendeten anregbaren Material beziehungsweise anregbaren Halbleitermaterials und/oder der Veränderung dieser Anregbarkeit und/oder der Temperatur und/oder der Verbindung / Anordnung / Einbindung einer erfindungsgemäß verwendbaren Vorrichtung und/oder eines damit verbundene memristiven Elements zum Beispiel in einem künstlichen neuronalen Netzwerk und/oder einer anderen Schaltung gewählt beziehungsweise eingestellt wird. Dabei kann die Wahl der zweiten Anregung beziehungsweise des zweiten Signals insbesondere zum Beispiel vom Spannungsschwellenwert und/oder der Veränderung des Spannungsschwellenwerts mit der Zeit und/oder von der Temperatur und/oder von der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung abhängen. Der Spannungsschwellenwert eines Phasenwechselmaterials, kann dabei als Schwellenwert für die elektrische Anregbarkeit gesehen werden. Die Wahl/Einstellung der ersten und/oder zweiten Anregung beziehungsweise des ersten und/oder zweiten Signals kann dabei bevorzugt genau einmal für jede erfindungsgemäß verwendbare Vorrichtung und/oder für eine Gruppe von mehr als zwei erfindungsgemäßen Vorrichtungen in Abhängigkeit der Materialeigenschaften des erfindungsgemäß verwendeten anregbaren anregbaren Halbleitermaterials und/oder der Temperatur und/oder der Verbindung/Anordnung/Einbindung einer erfindungsgemäß verwendbaren Vorrichtung und/oder eines damit verbundene memristiven Elements zum Beispiel in einem künstlichen neuronalen Netzwerk und/oder einer anderen Schaltung zum Beispiel insbesondere durch mindestens einen vorgesehenen Anregungsgenerator beziehungsweise Signalgenerator erfolgen. Die Form einer ersten und/oder zweiten Anregung beziehungsweise eines ersten und/oder zweiten Signals kann dabei zum Beispiel als Rechteckpuls, als zwei oder mehrere ineinander übergehende beziehungsweise unmittelbar aufeinander folgende Rechteckpulse mit unterschiedlichen Maxima (bezüglich Stromstärke und/oder Spannung), als Dreieckpuls oder als Rechteckpuls mit einem graduell ansteigenden und/oder absteigenden Maximum gewählt werden. Durch einen Rechteckpuls mit einem graduell ansteigenden und/oder absteigenden Maximum (bezüglich Stromstärke und/oder Spannung) kann dabei gegebenenfalls zum Beispiel ein graduelles STDP-Verhalten erreicht werden, bei dem der Widerstand einer künstlichen Synapse, welche eine erfindungsgemäß verwendbare Vorrichtung umfasst, umso mehr reduziert wird, je kürzer das Zeitintervall zwischen den zwei Anregungen beziehungsweise zwei Signalen ist, und/oder umso mehr erhöht wird, je länger das Zeitintervall zwischen den zwei Anregungen beziehungsweise zwei Signalen ist. Im Gegensatz dazu kann die Verwendung eines Rechteckpulses dazu führen, dass ein STDP-Verhalten erreicht wird, bei dem der Widerstand einer künstlichen Synapse, welche eine erfindungsgemäß verwendbare Vorrichtung umfasst, reduziert wird, wenn das Zeitintervall zwischen zwei Anregungen beziehungsweise zwei Signalen unter einem Wert für das Zeitintervall liegt und/oder der Widerstand einer künstlichen Synapse, welche eine erfindungsgemäß verwendbare Vorrichtung umfasst, erhöht wird, wenn das Zeitintervall zwischen zwei Anregungen beziehungsweise zwei Signalen über einem Wert für das Zeitintervall liegt.

Die vorliegende Erfindung betrifft ebenfalls ein Verfahren zur Auswertung eines Zeitintervalls zwischen zwei Anregungen beziehungsweise zwei Signalen, bei dem die Temperatur dazu verwendet werden kann, um die Veränderung der Anregbarkeit des anregbaren Halbleitermaterials im angeregten amorphen Zustand zu beeinflussen. Die Veränderung der Anregbarkeit kann dabei zum Beispiel beschleunigt oder verlangsamt werden. Das Zeitintervall zwischen zwei Anregungen beziehungsweise zwei Signalen, in dem durch die zweite Anregung beziehungsweise das zweite Signal eine Veränderung des Gewichts einer als künstliche Synapse verwendeten erfindungsgemäß verwendbaren Vorrichtung oder einer künstlichen Synapse, die eine erfindungsgemäß verwendbare Vorrichtung umfasst, erreicht werden kann, kann dadurch variiert/verändert werden.

Dadurch kann die Lernfähigkeit eines künstlichen neuronalen Netzwerks, welches mindestens eine erfindungsgemäß verwendbare Vorrichtung umfasst, gegebenenfalls beeinflusst und/oder verändert werden.

Die vorliegende Erfindung betrifft ebenfalls ein künstliches neuronales Netzwerk mit einer Vielzahl von miteinander verbundenen künstlichen Neuronen und/oder mit einer Vielzahl von miteinander verbundenen künstlichen Synapsen, bei dem das Netzwerk mindestens eine erfindungsgemäß verwendbare Vorrichtung umfasst und/oder unter Verwendung eines erfindungsgemäßen Verfahrens betrieben wird.

In einer Ausführungsform kann für das ganze neuronale Netzwerk und/oder für bestimmte Bereiche davon mindestens ein Heiz- und/oder Kühlelement vorgesehen sein. Dadurch kann das gesamte künstliche neuronale Netzwerk und/oder gewisse Bereiche davon durch Veränderung der Betriebstemperatur in seiner/ihrer Lernfähigkeit beeinflusst werden und/oder gegebenenfalls sogar von einem Lernmodus in einen Verarbeitungsmodus und/oder zurückgebracht werden.

In einer weiteren Ausführungsform kann das erfindungsgemäße künstliche neuronale Netzwerk auch mindestens einen Anregungsgenerator beziehungsweise Signalgenerator umfassen, der die erste und/oder die zweite Anregung beziehungsweise das erste und/oder das zweite erfindungsgemäße Signal in geeigneter Weise zum Beispiel in Abhängigkeit der Materialeigenschaften des verwendeten anregbaren Materials beziehungsweise anregbaren Halbleitermaterials, eines sinnvoll erscheinenden/gewünschten Wert für das maximale Zeitintervall in dem noch eine Korrelation zwischen zwei eingehenden Signalen erkannt werden soll, der Temperatur und/oder der Verbindung/Anordnung/Einbindung einer erfindungsgemäß verwendbaren Vorrichtung und/oder eines damit verbundenen memristiven Elements zum Beispiel in einem künstlichen neuronalen Netzwerk und/oder einer anderen Schaltung einstellen/auswählen kann. Die Materialeigenschaften des verwendeten anregbaren Halbleitermaterials umfassen dabei zum Beispiel insbesondere die Anregbarkeit beziehungsweise den Spannungsschwellenwert und/oder die Veränderung der Anregbarkeit mit der Zeit beziehungsweise den Drift des Spannungsschwellenwerts mit der Zeit.

### Beschreibung der Figuren:

Fig. 1 zeigt beispielhaft das Driften des Spannungsschwellenwerts (Vs in Volt) einer erfindungsgemäß verwendbaren Vorrichtung, welche Ge₂Sb₂Te₅ umfasst, mit der Zeit (in Sekunden) nach einem ersten Signal. Dieses Driften stellt die Veränderung der Anregbarkeit dieses Materials im angeregten amorphen Zustand dar. Ge₂Sb₂Te₅ ist dabei ein elektrisch anregbares Halbleitermaterial. Dieses Material wird in einer erfindungsgemäß verwendbaren Vorrichtung verwendet. Dieses Material wurde mit einem ersten kurzen Signal mit einer Spannung von 3 V anhaltend zumindest teilweise in einen amorphen angeregten Zustand gebracht. Insbesondere der an einer Elektrode zum Anlegen eines Signals unmittelbar angrenzende Bereich wurde dadurch in einen amorphen Zustand gebracht. Der Spannungsschwellenwert nimmt in diesem angeregten Zustand mit der Zeit von 1,4 V 0,001 s nach dem ersten Signal auf 1,8 V 10s nach dem ersten Signal zu.
   Der Widerstand des in einer erfindungsgemäß verwendbaren Vorrichtung verwendeten Ge₂Sb₂Te₅- Materials kann dabei durch ein zweites Signal temporär reduziert werden, wenn ein Wert für das Zeitintervall zwischen dem ersten und dem zweiten Signal nicht überschritten wird. Dazu kann zum Beispiel ein zweites Signal mit einer Spannung von 1,5 V gewählt beziehungsweise eingestellt werden. Der sich mit der Zeit verändernde Spannungsschwellenwert erreicht dabei einen Wert von 1,5 V 0,01 s nach dem ersten Signal. In diesem Fall kann der Widerstand des in einer erfindungsgemäß verwendbaren Vorrichtung verwendeten Ge₂Sb₂Te₅-Materials temporär reduziert werden, wenn ein Wert für die Länge des Zeitintervalls zwischen dem ersten und dem zweiten Signal nicht über 0,01 s liegt, da der Spannungsschwellenwert innerhalb dieses Zeitintervalls von dem zweiten Signal noch erreicht wird. Das zweite Signal muss somit früher als 0,01 s nach dem ersten Signal eintreffen, damit die Vorrausetzung für einen Wechsel zu einem besser leitenden Zustand noch erfüllt werden kann.
   Andererseits kann der Widerstand der erfindungsgemäß verwendbaren Vorrichtung unverändert bleiben, wenn ein Wert für das Zeitintervall zwischen dem ersten und dem zweiten Signal überschritten wird. Dies ist hier zum Beispiel der Fall, wenn das zweite Signal erst später als 0,01 s nach dem ersten Signal an der erfindungsgemäß verwendbaren Vorrichtung eintrifft. In diesem Fall kann das zweite Signal mit einer Spannung von 1,5 V keinen temporären Wechsel zu einem besser leitenden Zustand mehr auslösen, da der Spannungsschwellenwert nun nicht mehr erreicht wird.

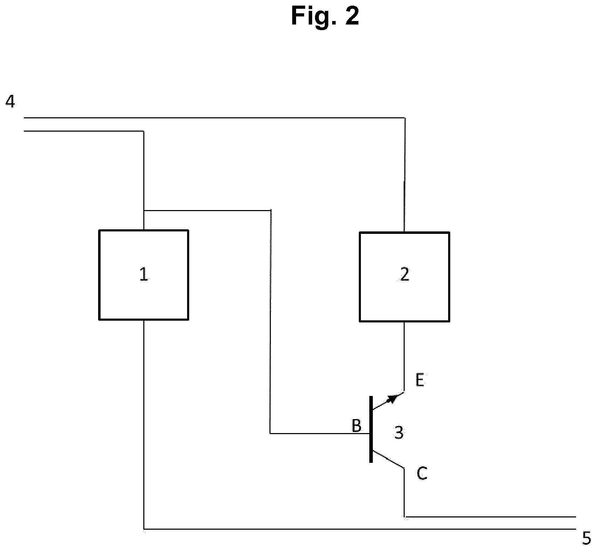

Fig. 2 zeigt eine beispielhafte Anordnung bei der eine erfindungsgemäß verwendbare Vorrichtung (1) den Zugang zu einem damit verbundenen memristiven Element (2) über/durch einen Transistor (3) steuern kann, wobei der Widerstand eines Transistors (3) und/oder der über/durch den Transistor (3) durchgelassene Teil/Strom eines zweiten Signals in Abhängigkeit einer erfindungsgemäß verwendbaren Vorrichtung (1) beziehungsweise in Abhängigkeit des von einer erfindungsgemäß verwendbaren Vorrichtung (1) durchgelassenen Teils/Stroms eines zweiten Signals (Stromstärke und/oder Spannung und/oder Dauer) verändert werden kann. Der Transistor (3) kann auch derart ausgestaltet sein, dass mindestens ein Teil jedes Signals durchgelassen wird ("leaky Transistor").
   Dabei kann eine Veränderung des Widerstands eines memristiven Elements (2) zum Beispiel durch eine Änderung des Widerstands des Transistors (3) ermöglicht und/oder vereinfacht werden, wenn zum Beispiel der Widerstand einer erfindungsgemäß verwendbaren Vorrichtung (1) temporär reduziert wird, insbesondere wenn das Zeitintervall zwischen einem ersten Signal, welches zum Beispiel aus der Richtung (4) kommen kann (welche die Richtung eines künstlichen präsynaptischen Neurons darstellen kann) und einem zweiten Signal, welches aus der Richtung (5) kommen kann (welche die Richtung eines künstlichen postsynaptischen Neurons darstellen kann) unter einem bestimmten Wert liegt, hier insbesondere zum Beispiel unter 0,01 s liegt. Eine temporäre Reduzierung der erfindungsgemäß verwendbaren Vorrichtung (1) führt dabei zu einer temporären Reduzierung des Widerstands des Transistors (3). Dadurch kann der Widerstand des memristiven Elements (2) mit dem zweiten Signal oder mit einem Teil davon verändert beziehungsweise reduziert werden. Der vom Transistor (3) durchgelassene Teil des zweiten Signals (Stromstärke und/oder Spannung und/oder Dauer) steht somit zur Verfügung um den Widerstand des memristiven Elements (2) zu verändern. Da der dem memristiven Element (2) vorgeschaltete Transistor (3) gegebenenfalls für jedes Signal zumindest teilweise durchlässig sein kann, wird jedes Signal durch den Widerstand des memristiven Elements (2) beeinflusst. Eine Verbesserung einer Verbindung zwischen den Punkten (4) und (5) kann somit durch eine Reduzierung des Widerstands des memristiven Elements (2) erfolgen. Die beiden Leitungen bei (4) können beide mit einem/demselben künstlichen präsynaptischen Neuron verbunden sein. Die beiden Leitungen bei (5) können beide wiederum mit einem/demselben künstlichen postsynaptischen Neuron verbunden sein. Die jeweils zwei Leitungen bei (4) und (5) könnten alternativ zum Beispiel auch jeweils nur eine Leitung bei (4) und (5) sein. Dadurch kann eine Verbindung zwischen diesen Neuronen verbessert werden.
   Andererseits kann eine Verschlechterung einer solchen Verbindung durch eine Erhöhung des Widerstands des memristiven Elements (2) erfolgen. Dies ist hier insbesondere zum Beispiel der Fall, wenn das zweite Signal später als 0,01 s nach dem ersten Signal an der erfindungsgemäß verwendbaren Vorrichtung (1) eintrifft. In diesem Fall wird der Widerstand der erfindungsgemäß verwendbaren Vorrichtung (1) nicht mehr temporär reduziert und der Teil des zweiten Signal der durch den Transistor (3) durchgelassen wird reicht nicht aus um den Widerstand des memristiven Elements (2) zu reduzieren (zum Beispiel durch einen langen Rechteckpuls mit einer niedrigeren Spannung der am Anfang des zweiten Signals vorgesehen sein kann) sondern nur dazu den Widerstand des Elements (2) gegebenenfalls zu erhöhen (zum Beispiel durch einen kurzen Rechteckpuls mit einer höheren Spannung der unmittelbar nach dem längeren Puls am Ende des zweiten Signals vorgesehen sein kann). Dazu kann das memristive Element und/oder das darin verwendet Material in geeigneter Weise gewählt werden. Dadurch kann ein STDP-Verhalten realisiert werden.

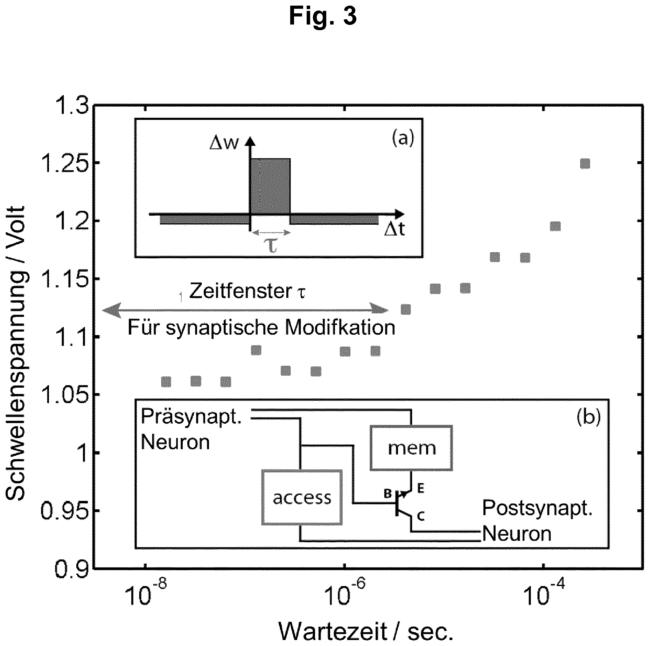

Figur 3 zeigt den Anstieg des Schwellenspannungswerts (in Volt) mit der Zeit (in 25 Sekunden) nach einem ersten Signal (einem sogenannten Reset-Puls) in einer lateralen Phasenwechsel-Zelle aus amorphen AgIn-Sb₂Te. Postsynaptische Signale mit einem fixen Spannungswert (z.B. 1,1 V) können ein Schalten der Zelle durch Übersteigen des Spannungsschwellenwerts nur in einem begrenzten Zeitfenster T nach dem letzten präsynaptischen Puls induzieren. Nur in diesem Fall erlaubt das amorphe Zugangselement den Fluss von signifikanten Strömen durch das memristive Element zur Potenzierung des synaptischen Gewichts (= "synaptic weight" als Maß für die Stärke einer Verbindung zwischen zwei (synaptischen) Knotenpunkten). Die eingesetzte Figur (a) zeigt das STDP, das mit dem in (b) dargestellten elektrischen Schaltkreis realisiert werden kann.

## Patentansprüche

1. Verfahren zur Auswertung eines Zeitintervalls zwischen zwei Anregungen, wobei
- eine erste Anregung an ein anregbares Halbleitermaterial angelegt wird, um dieses Material in einen angeregten amorphen Zustand zu versetzen,
- die Anregbarkeit des anregbaren Halbleitermaterials im angeregten amorphen Zustand mit der Zeit abnimmt, ergebend einen mit der Zeit ansteigenden Spannungsschwellenwert, der den Übergang zwischen schlechter Leitfähigkeit bei niedrigen Spannungen und guter Leitfähigkeit bei hohen Spannungen markiert,
- eine zweite Anregung an das anregbare Halbleitermaterial im angeregten amorphen Zustand angelegt wird, wobei die zweite Anregung so gewählt wird, dass ein temporärer Wechsel des anregbaren Halbleitermaterials von einem elektrisch schlechter leitenden zu einem elektrisch besser leitenden Zustand nur erfolgt, wenn ein Wert für das Zeitintervall zwischen der ersten und zweiten Anregung nicht überschritten wird,
- ein temporärer Wechsel von einem elektrisch schlechter leitenden zu einem elektrisch besser leitenden Zustand in Abhängigkeit der Veränderung der Anregbarkeit des anregbaren Halbleitermaterials im angeregten amorphen Zustand durch die zweite Anregung ausgelöst wird,
- wobei die Auswertung des Zeitintervals zwischen zwei Anregungen dadurch erfolgt, dass die Wahrscheinlichkeit, eine Veränderung mit einer zweiten Anregung auslösen zu können, ensprechend der mit der Zeit abnehmenden elektrischen Anregbarkeit, mit der Zeit abnimmt.

2. Verfahren zur Auswertung eines Zeitintervalls zwischen zwei Anregungen nach Anspruch 1,
wobei der Widerstand eines memristiven Elements, welches mit einer erfindungsgemäßen Vorrichtung verbunden ist und dessen Zugang durch diese Vorrichtung gesteuert wird, anhaltend reduziert wird, wenn das Zeitintervall zwischen zwei Anregungen beziehungsweise zwei Signalen kurz genug ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringt oder alternativ dass der Widerstand eines memristiven Elements, welches mit einer erfindungsgemäßen Vorrichtung verbunden ist und dessen Zugang durch diese Vorrichtung gesteuert wird, anhaltend erhöht wird, wenn das Zeitintervall zwischen zwei Anregungen beziehungsweise zwei Signalen zu lang ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringt.

3. Verfahren zur Auswertung eines Zeitintervalls zwischen zwei Signalen nach Anspruch 1,
wobei der Widerstand eines Phasenwechselmaterials als elektrisch anregbares Halbleitermaterial, welches in einer erfindungsgemäßen Vorrichtung verwendet wird, anhaltend reduziert wird, wenn das Zeitintervall zwischen zwei Anregungen beziehungsweise zwei Signalen kurz genug ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringt oder alternativ dass der Widerstand eines Phasenwechselmaterials als elektrisch anregbares Halbleitermaterial, welches in einer erfindungsgemäßen Vorrichtung verwendet wird, anhaltend erhöht wird, wenn das Zeitintervall zwischen zwei Anregungen beziehungsweise zwei Signalen zu lang ist, damit eine zweite Anregung beziehungsweise ein zweites Signal das angeregte amorphe Halbleitermaterial noch temporär von einem elektrisch schlechter leitenden Zustand in einen elektrisch besser leitenden Zustand bringt.

4. Verfahren zur Auswertung eines Zeitintervalls zwischen zwei Signalen nach einem oder mehreren der Ansprüche 1 bis 3,
wobei ein Anregungsgenerator beziehungsweise ein Signalgenerator mindestens eine Anregung beziehungsweise mindestens ein Signal in geeigneter Weise auswählt beziehungsweise einstellt oder alternativ dass eine Erhöhung oder Reduzierung der Temperatur dazu verwendet wird, um die Veränderung der Anregbarkeit des anregbaren Halbleitermaterials im angeregten amorphen Zustand zu beeinflussen.

5. Verwendung einer Vorrichtung für das Verfahren zur Auswertung eines Zeitintervalls zwischen zwei Anregungen gemäß einem der Ansprüche 1 bis 4,
wobei
die Vorrichtung ein elektrisch anregbares Halbleitermaterial umfasst, das durch ein erstes Signal in einen angeregten amorphen Zustand gebracht wird, wobei die elektrische Anregbarkeit des Halbleitermaterials im angeregten amorphen Zustand sich mit der Zeit verändert und das Halbleitermaterial in diesem angeregten amorphen Zustand durch ein zweites Signal zu einem Wechsel von einem elektrisch schlechter leitenden zu einem elektrisch besser leitenden Zustand gebracht wird, wobei ferner der Wechsel in Abhängigkeit der Veränderung der Anregbarkeit des Halbleitermaterials im angeregten amorphen Zustand erfolgt.

6. Verwendung der Vorrichtung gemäß Anspruch 5,
wobei das elektrisch anregbare Halbleitermaterial mindestens ein Element der Gruppen III und/oder IV A und/oder V A und/oder VI A des Periodensystems und/oder mindestens ein Chalkogenid und/oder ein modifiziertes Chalkogenid umfasst.

7. Verwendung der Vorrichtung nach Anspruch 5 oder 6,
wobei das elektrisch anregbare Halbleitermaterial ein Phasenwechselmaterial ist, welches zum Beispiel durch eine elektrische Spannung anregbar ist, wobei das Phasenwechselmaterial im angeregten amorphen Zustand durch eine Spannung anregbar ist, die über einem Spannungsschwellenwert liegt, wobei der Spannungsschwellenwert des Phasenwechselmaterials im angeregten amorphen Zustand und somit die elektrische Anregbarkeit dieses Materials sich mit der Zeit verändert.

8. Verwendung der Vorrichtung nach einem oder mehreren der Ansprüche 5 bis 7,
wobei die Vorrichtung mindestens ein Heizelement und/oder Kühlelement zur Veränderung der Anregbarkeit des verwendeten anregbaren Materials in Abhängigkeit von der Temperatur und/oder mindestens einen Anregungsgenerator beziehungsweise Signalgenerator umfasst.

9. Verwendung der Vorrichtung nach einem oder mehreren der Ansprüche 5 bis 8,
wobei mindestens eine Vorrichtung nach einem der Ansprüche 5 bis 8 in einem künstlichen neuronalen Netzwerk und/oder in einer künstlichen Synapse und/oder als Teil einer künstlichen Synapse und/oder als künstliche Synapse vorgesehen ist beziehungsweise verwendet wird.

10. Verwendung der Vorrichtung nach Anspruch 9,
wobei mindestens eine Vorrichtung nach einem der Ansprüche 5 bis 9 dazu verwendet wird, den elektrischen Widerstand an bestimmten Punkten eines neuronalen Netzwerks als künstliche Synapse in Abhängigkeit des Zeitintervalls zwischen zwei an der Vorrichtung angelegten/ankommenden Signalen zu verändern, wobei eine Veränderung des Widerstands durch eine Veränderung des Widerstands eines memristiven Elements erfolgt, welches mit der erfindungsgemäßen Vorrichtung verbunden ist, die den Zugang zu diesem memristiven Element steuert.

11. Verwendung der Vorrichtung nach Anspruch 9,
wobei die Vorrichtung dazu verwendet wird, den elektrischen Widerstand an bestimmten Punkten eines neuronalen Netzwerks insbesondere zum Beispiel als künstliche Synapse in Abhängigkeit des Zeitintervalls zwischen zwei an der Vorrichtung angelegten/ankommenden Signalen zu verändern, wobei eine Veränderung des Widerstands durch eine Veränderung des Widerstands des in einer erfindungsgemäßen Vorrichtung verwendeten anregbaren Halbleitermaterials beziehungsweise Phasenwechselmaterials erfolgt.

12. Künstliches Neuronales Netzwerk mit einer Vielzahl von miteinander verbundenen künstlichen Neuronen,
welches unter Verwendung einer Vorrichtung nach einem der Ansprüche 9 bis 11 betrieben wird.

13. Künstliches Neuronales Netzwerk mit einer Vielzahl von miteinander verbundenen künstlichen Neuronen nach Anspruch 12,
wobei es mindestens ein Heiz- und/oder Kühlelement zur Veränderung der Anregbarkeit des verwendeten anregbaren Materials in Abhängigkeit von der Temperatur und/oder mindestens einen Anregungsgenerator beziehungsweise einen Signalgenerator umfasst.

## Claims

1. Method of evaluating a time-interval between two excitations, wherein
- a first excitation is applied to an excitable semiconductor material for changing this material to an excited amorphous state,
- the excitability of the excitable semiconductor material in the excited amorphous state decreases with time, resulting in a voltage threshold value rising with time which marks the transition between low conductivity at low voltages and high conductivity at high voltages,
- a second excitation is applied to the excitable semiconductor material in the excited amorphous state, the second excitation being selected such that a temporary change of the excitable semiconductor material from a state with lower electrical conductivity to a state with higher electrical conductivity only takes place if a value for the time-interval between the first and the second excitation is not exceeded,
- a temporary change from a state with lower electrical conductivity to a state with higher electrical conductivity in dependence on alteration of excitability of the excitable semiconductor material in the excited amorphous state is triggered by the second excitation,
- where evaluation of the time-interval between two excitations takes place due to the fact that the probability of triggering a change with a second excitation decreases over time in accordance with the electrical excitability decreasing over time.

2. Method of evaluating a time-interval between two excitations according to Claim 1,
wherein the resistance of a memristive element which is connected to a device according to the invention and whose access is controlled by this device, is persistently reduced if the time-interval between two excitations or two signals, respectively, is short enough so that a second excitation or a second signal, respectively, changes the excited amorphous semiconductor material, still temporarily, from a state with lower electrical conductivity to a state with higher electrical conductivity, or alternatively, the resistance of a memristive element which is connected to a device according to the invention and whose access is controlled by this device, is persistently increased if the time-interval between two excitations or two signals, respectively, is too long for a second excitation or a second signal, respectively, to change the excited amorphous semiconductor material, still temporarily, from a state with lower electrical conductivity to a state with higher electrical conductivity.

3. Method of evaluating a time-interval between two signals according to Claim 1,
wherein
the resistance of a phase change material as an electrically excitable semiconductor material used in a device according to the invention is persistently reduced if the time-interval between two excitations or two signals, respectively, is short enough so that a second excitation or a second signal, respectively, changes the excited amorphous semiconductor material, still temporarily, from a state with lower electrical conductivity to a state with higher electrical conductivity, or alternatively, the resistance of a phase change material as an electrically excitable semiconductor material used in a device according to the invention is pesistently increased if the time-interval between two excitations or two signals, respectively, is too long for a second excitation or a second signal, respectively, to change the excited amorphous semiconductor material, still temporarily, from a state with lower electrical conductivity to a state with higher electrical conductivity.

4. Method of evaluating a time-interval between two signals according to one of more of Claims 1-3,
wherein
an excitation generator or a signal generator, respectively, selects or sets at least one excitation or at least one signal, respectively, in a suitable manner, or alternatively, an increase or reduction in temperature is used to influence the change in excitability of the excitable semiconductor material in the excited amorphous state.

5. Use of a device for the method for the evaluation of a time-interval between two excitations according to one of Claims 1 through 4,
the device comprising an electrically excitable semiconductor material brought into a excited amorphous state by a first signal; the electrical excitability of the semiconductor material in the excited amorphous state changing with time and the semiconductor material in this excited amorphous state being caused to change from a state with lower electrical conductivity to a state with higher electrical conductivity by a second signal; the change furthermore occurring in dependence of the change of excitability of the semiconductor material in the excited amorphous state.

6. Use of the device according to Claim 5,
where
the electrically excitable semiconductor material comprises at least one element of groups III and/or IV A and/or V A and/or VI A of the periodic table and/or at least one chalcogenide and/or one modified chalcogenide.

7. Use of the device according to Claim 5 or 6,
the electrically excitable semiconductor material being a phase change material excitable for instance by an electrical voltage, the phase change material in the excited amorphous state being excitable by a voltage above a voltage threshold value, the voltage threshold value of the phase change material in the excited amorphous state, and thus the electrical excitability of this material, changing over time.

8. Use of the device according to one or more of Claims 5 through 7,
the device comprising at least one heating element and/or cooling element for changing excitability of the employed excitable material in dependence on the temperature, and/or at least one excitation generator or signal generator, respectively.

9. Use of the device according to one or more of Claims 5 through 8,
at least one device according to one of Claims 5 through 8 being provided or used, respectively, in an artificial neural network and/or in an artificial synapse and/or as part of an artificial synapse and/or as an artificial synapse.

10. Use of the device according to Claim 9, at least one device according to one of Claims 5 through 9 being employed for changing the electrical resistance at specific points of a neural network as an artificial synapse in dependence of the time-interval between two signals applied/arriving at the device, a change in resistance occurring by a change in resistance of a memristive element connected to the device according to the invention which controls access to this memristive element.

11. Use of the device according to Claim 9,
the device being employed for changing the electrical resistance at specific points of a neural network, especially for example as an artificial synapse, in dependence of the time-interval between two signals applied/arriving at the device, a change in resistance occurring by a change in resistance of the excitable semiconductor material or phase change material, respectively, used in a device according to the invention.

12. Artificial neural network having a plurality of interconnected artificial neurons, which is operated by means of a device according to one of Claims 9 through 11.

13. Artificial neural network having a plurality of interconnected artificial neurons according to Claim 12, comprising at least one heating and/or cooling element for changing excitability of the employed excitable material in dependence on the temperature, and/or at least one excitation generator or signal generator, respectively.

## Revendications

1. Procédé d'évaluation d'un intervalle de temps entre deux excitations, dans lequel
- une première excitation est appliquée à un matériau semi-conducteur excitable pour mettre ce matériau dans un état amorphe excité,
- l'excitabilité du matériau semi-conducteur excitable à l'état amorphe excité diminue avec le temps, ce dont il résulte avec le temps une valeur de seuil de tension croissante, qui marque la transition entre une mauvaise conductivité à basse tension et une bonne conductivité à haute tension,
- une deuxième excitation est appliquée au matériau semi-conducteur excitable à l'état amorphe excité, dans lequel la deuxième excitation est choisie de telle sorte qu'un changement temporaire du matériau semi-conducteur excitable d'un état électriquement peu conducteur à un état électriquement meilleur ne se produise que si une valeur pour l'intervalle de temps entre la première et la seconde excitation n'est pas dépassée,
- un changement temporaire d'un état électriquement peu conducteur à un état électriquement mieux conducteur en fonction de la variation de l'excitabilité du matériau semi-conducteur excitable à l'état amorphe excité est déclenché par la deuxième excitation,
- dans lequel L'évaluation de l'intervalle de temps entre deux excitations a lieu en ce que la probabilité de pouvoir déclencher un changement avec une deuxième excitation, correspondant à l'excitabilité électrique décroissante avec le temps, diminue avec le temps.

2. Procédé d'évaluation d'un intervalle de temps entre deux excitations selon la revendication 1,
dans lequel la résistance d'un élément memristif, qui est connecté à un dispositif selon l'invention et dont l'accès est commandé par ce dispositif, est continuellement réduite, lorsque l'intervalle de temps entre deux excitations ou deux signaux courts est suffisant pour qu'une seconde excitation ou un second signal amène temporairement le matériau semi-conducteur amorphe excité d'un état électriquement peu conducteur à un état électriquement mieux conducteur, ou encore que la résistance d'un élément memristif, qui est connecté à un dispositif selon l'invention et dont l'accès est commandé par ce dispositif est augmentée en continu si l'intervalle de temps entre deux excitations ou deux signaux est trop long, de sorte qu'une deuxième excitation ou un deuxième signal du matériau semi-conducteur amorphe excité fasse passer temporairement d'un état électriquement peu conducteur à un état électriquement mieux conducteur.

3. Procédé d'évaluation d'un intervalle de temps entre deux signaux selon la revendication 1,
dans lequel la résistance d'un matériau à changement de phase en tant que matériau semi-conducteur électriquement excitable, qui est utilisé dans un dispositif selon l'invention, est continuellement réduite si l'intervalle de temps entre deux excitations ou deux signaux est suffisamment court, ainsi une deuxième excitation ou un deuxième signal amène temporairement un matériau semi-conducteur amorphe excité d'un état électriquement moins conducteur à un état électriquement mieux conducteur ou en variante, que la résistance d'un matériau à changement de phase en tant que matériau semi-conducteur électriquement excitable qui est utilisé dans un dispositif selon l'invention est augmentée en continu, si l'intervalle de temps entre deux excitations ou deux signaux est trop long, ainsi une deuxième excitation ou un deuxième signal amène temporairement le matériau semi-conducteur amorphe excité d'un état électriquement peu conducteur à un état électriquement mieux conducteur.

4. Procédé d'évaluation d'un intervalle de temps entre deux signaux selon une ou plusieurs des revendications 1 à 3,
dans lequel un générateur d'excitation ou un générateur de signal sélectionne ou ajuste au moins une excitation ou au moins un signal d'une manière appropriée ou en variante, qu'une augmentation ou une réduction de la température est utilisée pour influencer le changement de l'excitabilité du matériau semi-conducteur excitable à l'état amorphe excité.

5. Utilisation d'un appareil pour le procédé d'évaluation d'un intervalle de temps entre deux excitations selon une des revendications 1 à 4,
dans laquelle le dispositif comprend un semi-matériau électriquement excitable qui est amené dans un état amorphe excité par un premier signal, dans lequel l'excitabilité électrique du matériau semi-conducteur à l'état amorphe excité varie dans le temps et le matériau semi-conducteur à cet état amorphe excité est amené à passer d'un état électriquement peu conducteur à un état électriquement mieux conducteur par un second signal à un changement, dans lequel en outre le changement a lieu en fonction de la variation de l'excitabilité du matériau semi-conducteur à l'état amorphe excité.

6. Utilisation du dispositif selon la revendication 5, dans laquelle le matériau semi-conducteur électriquement excitable comprend au moins un élément des groupes III et/ou IV A et/ou V A et/ou VI A du tableau périodique et/ou au moins un chalcogénure et/ou un chalcogénure modifié.

7. Utilisation du dispositif selon la revendication 5 ou 6,
dans laquelle le matériau semi-conducteur électriquement excitable est un matériau à changement de phase, qui peut être excité, par exemple, par une tension électrique, le matériau à changement de phase à l'état amorphe excité étant excitable par une tension qui est supérieure à une valeur de seuil de tension, dans laquelle la valeur de seuil de tension du matériau à changement de phase à l'état amorphe excité et donc l'excitabilité électrique de ce matériau varie au fil du temps.

8. Utilisation du dispositif selon une ou plusieurs des revendications 5 à 7,
dans laquelle le dispositif comprend au moins un élément chauffant et/ou un élément refroidissant pour modifier l'excitabilité du matériau excitable utilisé en fonction de la température et/ou au moins un générateur d'excitation, respectivement générateur de signaux.

9. Utilisation du dispositif selon une ou plusieurs des revendications 5 à 8,
dans laquelle au moins un dispositif selon une des revendications 5 à 8 est prévu, respectivement est utilisé dans un réseau neuronal artificiel et/ou dans une synapse artificielle et/ou comme partie d'une synapse artificielle et/ou comme synapse artificielle.

10. Utilisation du dispositif selon la revendication 9, dans laquelle au moins un dispositif selon une des revendications 5 à 9 est utilisé pour modifier la résistance électrique en des points déterminés d'un réseau neuronal comme une synapse artificielle en fonction d'un intervalle de temps entre deux signaux appliqués/arrivés sur l'appareil, dans laquelle une variation de résistance est effectuée par une variation de résistance d'un élément memristif qui est connecté au dispositif selon l'invention, qui commande l'accès à cet élément memristif.

11. Utilisation du dispositif selon la revendication 9, dans laquelle le dispositif est utilisé pour modifier la résistance électrique en des points déterminés d'un réseau neuronal comme une synapse artificielle en fonction de l'intervalle de temps entre deux signaux appliqués/ arrivés à l'appareil, dans laquelle une variation de la résistance a lieu via une variation de du matériau semi-conducteur excitable ou du matériau à changement de phase utilisé dans un dispositif selon l'invention.

12. Réseau neuronal artificiel comportant une pluralité de neurones artificiels interconnectés,
qui est mis en fonctionnement en utilisant un dispositif selon une des revendications 9 à 11.

13. Réseau neuronal artificiel comportant une pluralité de neurones artificiels interconnectés selon la revendication 12,
dans lequel il comprend au moins un élément chauffant et/ou refroidissant pour changer l'excitabilité du matériau excitable utilisé en fonction de la température et/ou au moins un générateur d'excitation, respectivement un générateur de signaux.
